(19) Europäisches Patentamt
European Patent Office
Office européen des brevets

(11) **EP 4 722 282 A1**

(12) **EUROPEAN PATENT APPLICATION**
published in accordance with Art. 153(4) EPC

(43) Date of publication:
**08.04.2026 Bulletin 2026/15**

(21) Application number: **24815342.1**

(22) Date of filing: **22.05.2024**

(51) International Patent Classification (IPC):
**C08J 9/224** (2006.01)  **C08J 9/16** (2006.01)

(52) Cooperative Patent Classification (CPC):
**C08J 9/16; C08J 9/224**

(86) International application number:
**PCT/JP2024/018917**

(87) International publication number:
**WO 2024/247858 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.05.2023 JP 2023087082**

(71) Applicant: **JSP Corporation
Tokyo 100-0005 (JP)**

(72) Inventors:
• **CHIBA Takuya
Yokkaichi-shi, Mie 510-0881 (JP)**
• **MASUMOTO Hisashi
Yokkaichi-shi, Mie 510-0881 (JP)**
• **SHIMADA Tomohito
Yokkaichi-shi, Mie 510-0955 (JP)**

(74) Representative: **Blumbach · Zinngrebe
Patentanwälte PartG mbB
Alexandrastraße 5
65187 Wiesbaden (DE)**

(54) **POLYPROPYLENE-BASED RESIN FOAM PARTICLE MOLDED BODY AND POLYPROPYLENE-BASED RESIN FOAM PARTICLE**

(57) Provided is a polypropylene-based resin expanded bead molded body that exhibits sufficient electrostatic charging capabilities despite being formed of polypropylene-based resin expanded beads containing carbon materials. The polypropylene-based resin expanded bead molded body of the present invention is a molded body of polypropylene-based resin expanded beads containing carbon materials, wherein talc is present in a surface portion of the molded body of the expanded beads, and an initial charged voltage $V_0$ at an applied voltage of +10 kV and a charged voltage $V_{120}$ at 120 seconds after stoppage of voltage application, which are measured in accordance with JIS L1094:2014 A method, meet the following formula (1):

$$(V_0 - V_{120}) \times 100/V_0 \leq 25(\%) \ \ldots \ (1).$$

Figure 3

Fig.3

EP 4 722 282 A1

**Description**

Technical Field

The present invention relates to a molded body of polypropylene-based resin expanded beads (foam particles) and polypropylene-based resin expanded beads.

Background Art

A molded body of polypropylene-based resin expanded beads obtained by in-mold molding of polypropylene-based resin expanded beads is used in various applications such as packaging cushioning materials, automobile members, and building materials. The polypropylene-based resin expanded beads are added with additives such as a colorant, a conductivity imparting agent, an antibacterial agent, an antistatic agent, and the like in accordance with the applications of the polypropylene-based resin expanded bead molded body.

In addition, since the polypropylene-based resin itself has insulation properties, when charges are generated on the surface of the molded body due to friction with other substances or the like, a charged state by static electricity is maintained in the molded body for a long time. Furthermore, even when the molded body of the polypropylene-based resin is in contact with a metal conductor, if the metal conductor is insulated by an insulator that surrounds it, the charged state of the molded body is maintained.

In industry, it is widely practiced to utilize a charged state of a substance, that is, a charging phenomenon. Examples of the applications include air filters, air cleaners, photosensitive drums of copiers, electrets of acoustic elements, electrostatic sorting of plastics, electrostatic flocking, electrostatic coating, and the like.

On the other hand, an expanded bead molded body formed of black or gray polypropylene-based resin expanded beads that contain a coloring pigment such as carbon black has been known (Patent Literature 1). The expanded bead molded body is expected to be used in response to various viewpoints such as segregation from a polystyrene resin expanded bead molded body, measures for improving appearance properties against stains, and measures for improving appearance properties when a colored recycled raw material is used. In addition, the expanded bead molded body is excellent in light shielding properties, weather resistance, design properties, and the like.

Citation List

Patent Literature

PTL 1: Japanese Patent Application Laid-Open No. Hei. 07-300537

Summary of Invention

Technical Problem

In order to apply the colored expanded bead molded body to various applications utilizing the charging phenomenon, the present inventors have attempted to charge the colored expanded bead molded body. However, the present inventors have found that it is difficult for the colored expanded bead molded body to exhibit electrostatic charging capabilities as compared with an uncolored molded body.

The present invention has been made in view of such a background, and an object of the present invention is to provide a polypropylene-based resin expanded bead molded body that exhibits sufficient electrostatic charging capabilities despite being formed of polypropylene-based resin expanded beads containing carbon materials. Another object of the present invention is to provide polypropylene-based resin expanded beads from which the polypropylene-based resin expanded bead molded body can be obtained by in-mold molding. Solution to Problem

[1] A molded body of polypropylene-based resin expanded beads containing carbon materials, wherein talc is present in a surface portion of the molded body of the expanded beads, and an initial charged voltage $V_0$ at an applied voltage of +10 kV and a charged voltage $V_{120}$ at 120 seconds after stoppage of voltage application, which are measured in accordance with JIS L1094:2014 A method, meet the following formula (1):

$$(V_0 - V_{120}) \times 100/V_0 \leq 25 \ \ldots \ (1).$$

[2] The molded body of polypropylene-based resin expanded beads according to [1], wherein an amount of talc present in the surface portion of the molded body of the expanded beads is 500 ppm by mass or more and 9000 ppm by mass or less.

[3] The molded body of polypropylene-based resin expanded beads according to [1] or [2], wherein a molded body density of the molded body of the expanded beads is 15 kg/m³ or more and 300 kg/m³ or less, and a fusion-bonding ratio of the molded body of the expanded beads is 80% or more.

[4] Polypropylene-based resin expanded beads containing carbon materials, wherein

talc is present in a surface portion of the expanded bead, and an amount of the talc present in the surface portion of the expanded bead is 600 ppm by mass or more and 10000 ppm by mass or less.

[5] The polypropylene-based resin expanded beads according to [4], wherein the expanded beads are multilayer expanded beads each having a polypropylene-based resin foamed core layer and a cover layer that covers the foamed core layer, and at least the cover layer contains carbon materials.

Advantageous Effects of Invention

According to the present invention, provided is a molded body of polypropylene-based resin expanded beads containing carbon materials, and the molded body exhibits good electrostatic chargeability. The present invention further provides polypropylene-based resin expanded beads with which the molded body of the expanded beads can be obtained by in-mold molding. The molded body of polypropylene-based resin expanded beads of the present invention can be expected to be utilized in various applications utilizing electrostatic chargeability.

Brief Description of Drawings

[Fig. 1] Fig. 1 is an explanatory view showing a state in which talc is present in a single-layer expanded bead.
[Fig. 2] Fig. 2 is an explanatory view showing another state in which talc is present in a single-layer expanded bead.
[Fig. 3] Fig. 3 is an explanatory view showing a state in which talc is present in a multilayer expanded bead.
[Fig. 4] Fig. 4 is an explanatory view showing another state in which talc is present in a multilayer expanded bead.
Description of Embodiments

Hereinafter, a molded body of polypropylene-based resin expanded beads of the present invention and polypropylene-based resin expanded beads capable of in-mold molding of the expanded bead molded body will be described in detail.

In the present specification, the polypropylene resin expanded beads are appropriately referred to as "expanded beads," and the molded body of polypropylene-based resin expanded beads is appropriately referred to as "molded body, or expanded bead molded body."

In the present specification, in a case where a plurality of types of numerical value ranges are defined as "numerical values for matters defined using numerical values (referred to as numerical value defining matters (NM)) such as numerical values corresponding to specific attributes and addition amounts, upper limit values and lower limit values in combinations to define numerical value ranges for the respective numerical value defining matters (NM) may be independently and arbitrarily combined. In the present specification, a combination defining a numerical range refers to a combination of an upper limit value and a lower limit value. The numerical range defined by arbitrarily combining an upper limit value and a lower limit value includes the upper limit value, the lower limit value, and values between the upper limit value and the lower limit value (that is, the numerical range is equal to or more than the lower limit value and equal to or less than the upper limit value). For example, in a case where a numerical value for a target numerical value defining matter (NM) (density, blending amount, or the like of a specific compound) is MA1 or more and MB1 or less, preferably MA2 or more and MB2 or less, and more preferably MA3 or more and MB3 or less, the lower limit value of the target numerical value defining matter (NM) may be any value (selected lower limit value) selected from the group consisting of MA1, MA2, and MA3 (the group indicates a group of a plurality of elements (group of numerical values or the like)), and the upper limit value of the target numerical value defining matter (NM) may be any value (selected upper limit value) selected from the group consisting of MB1, MB2, and MB3. Furthermore, the numerical range of the target numerical value defining matter (NM) may be a numerical range (selected numerical range) equal to or more than the "selected lower limit value " and equal to or less than the" selected upper limit value." Note that MA1, MA2, MA3, MB1, MB2, and MB3 indicate numerical values.

Unless otherwise specified, even in a case where numerical value defining matters (NM) different from each other are combined, the upper limit values of the respective numerical value defining matters (NM) may be individually set as "selected upper limit values". The same applies to the lower limit value and the numerical range of the numerical value defining matters (NM).

(Expanded Bead Molded Body)

The expanded bead molded body of the present invention is an in-mold molded body of polypropylene-based resin expanded beads containing carbon materials, and talc is present in a surface portion of the expanded bead molded body. In addition, the expanded bead molded body is configured such that an initial charged voltage $V_0$ at an applied voltage of +10 kV and a charged voltage $V_{120}$ at 120 seconds after stoppage of the voltage application, which are measured in accordance with JIS L1094:2014 A method, meet the following formula (1). The present invention is characterized in that even a molded body of polypropylene resin expanded beads containing carbon materials has electrostatic chargeability that is effective enough to meet the following formula (1) because of the presence of talc in the surface portion of the molded body.

$$(V_0 - V_{120}) \times 100/V_0 \leq 25\% \ ... \ (1)$$

The numerical value defined by the left side of the formula (1) (the value defined by $((V_0 - V_{120}) \times 100/V_0)$ may be referred to as a charged voltage attenuation rate. When the charged voltage attenuation rate falls within the above-described range, the expanded bead in-mold molded body has a property of maintaining a charged state over a long period of time. The charged voltage attenuation rate is preferably 20% or less, more preferably 15% or less, still more preferably 10% or less, and most preferably 5% or less. The lower limit of the charged voltage attenuation rate is preferably as low as possible. The lower limit of the charged voltage attenuation rate is about 1%. That is, the charged voltage attenuation rate is preferably about 1% or more. The numerical range of the charged voltage attenuation rate of the expanded bead molded body may be, for example, a range (numerical range of the lower limit value or more and the upper limit value or less) in which any one value selected from the group (numerical group) consisting of 0% and 1% is set as the lower limit value and any one value selected from the group (numerical group) consisting of 20%, 15%, 10%, and 5% is set as the upper limit value.

(Molded Body Density)

A density of the expanded bead molded body (molded body density) is preferably 15 kg/m$^3$ or more and 500 kg/m$^3$ or less. When the molded body density is 15 kg/m$^3$ or more and 500 kg/m$^3$ or less, the weight of the molded body can be reduced while increasing the rigidity of the molded body. From the viewpoint of improving the effect of excellent balance between the rigidity and weight reduction of the molded body, the molded body density is more preferably 15 kg/m$^3$ or more and 300 kg/m$^3$ or less, and still more preferably 20 kg/m$^3$ or more and 150 kg/m$^3$ or less. The molded body density is calculated by dividing the mass of the molded body by the volume that is calculated based on the dimensions of the molded body. The numerical range of the molded body density may be, for example, a range (numerical range of the lower limit value or more and the upper limit value or less) in which any one value selected from the group consisting of 15 kg/m$^3$ and 20 kg/m$^3$ is set as the lower limit value and any one value selected from the group consisting of 300 kg/m$^3$ and 150 kg/m$^3$ is set as an upper limit value.

(Tensile Strength of Molded Body)

A tensile strength of the expanded bead molded body of the present invention is preferably 150 kPa or more, more preferably 200 kPa or more, and still more preferably 250 kPa or more. When the tensile strength falls within the above-described range, the expanded bead molded body is excellent in fusion bondability in spite of the presence of talc on the surface of the expanded beads, so that the molded body is excellent in mechanical properties. The upper limit of the tensile strength of the expanded bead molded body is about 6000 kPa. The numerical range of the tensile strength of the expanded bead molded body may be, for example, a range (numerical range of the lower limit value or more and the upper limit value or less) in which any one value selected from the group consisting of 150 kPa, 200 kPa, and 250 kPa is set as the lower limit value and 6000 kPa is set as the upper limit value.

The tensile strength (kPa) of the expanded bead molded body is measured in accordance with JIS K6767:1999. Specifically, the tensile strength (kPa) is determined by cutting out the expanded bead molded body using a vertical slicer to produce a cut-out piece having a length of 120 mm, a width of 25 mm, and a thickness of 10 mm in a manner such that all surfaces are cut-out surfaces, preparing a dumbbell-shaped No. 1 test piece using a jigsaw from the cut-out piece, and performing a tensile test on the test piece at a tensile speed of 500 mm/min. The maximum value (kPa) measured in the tensile test is defined as the tensile strength of the expanded bead molded body.

(Tensile Strength of Molded Body / Molded Body Density)

In the present invention, a value of a ratio of the tensile strength of the expanded bead molded body / the molded body density (kPa/(kg/m$^3$)) (the value obtained by dividing the tensile strength of the expanded bead molded body by the molded body density) is preferably 5 kPa/(kg/m$^3$) or more, more preferably 7 kPa/(kg/m$^3$) or more, and still more preferably 9 kPa/(kg/m$^3$) or more. When the ratio falls within the above-described range, the expanded bead molded body is excellent in fusion bondability in spite of the presence of talc on or near the surfaces of the expanded beads, so that the molded body is excellent in mechanical properties. The upper limit of the ratio is about 20 kPa/(kg/m$^3$). The numerical range of the ratio of the tensile strength of the expanded bead molded body / the molded body density may be, for example, a range (numerical range of the lower limit value or more and the upper limit value or less) in which any one value selected from the group consisting of 5 kPa/(kg/m$^3$), 7 kPa/(kg/m$^3$), and 9 kPa/(kg/m$^3$) is set as the lower limit value and 20 kPa/(kg/m$^3$) is set as the upper limit value.

(Fusion-Bonding Ratio of Molded Body)

The expanded bead molded body of the present invention is obtained by fusion-bonding a plurality of expanded beads. A fusion-bonding ratio of the expanded bead molded body is preferably 80% or more, and more preferably 90% or more. The expanded bead molded body having a fusion-bonding ratio that falls within the above-described range is excellent in fusion bondability and mechanical properties even though a mineral such as talc is present at an interface derived from a plurality of expanded beads in the expanded bead molded body.

The fusion-bonding ratio can be determined based on the ratio of the number of expanded beads of which the material is broken to the expanded beads exposed on the fracture surface when the expanded bead molded body is fractured. Specifically, first, a pre-processing test piece (length 150 mm × width 75 mm × thickness 25 mm) is cut out from the vicinity of the central portion in terms of the thickness direction of the expanded bead molded body. Thereafter, a cut having a depth of about 2 mm in the thickness direction is made in each pre-processing test piece with a cutter knife in a manner where the cut is orthogonal to the longitudinal direction and passes through the central portion, thereby preparing a test piece. Then, using the test piece, a three-point bending test is performed in accordance with JIS K7221-2 (2006) under conditions of a distance of 70 mm between fulcrums and a pressure wedge speed of 200 mm/min. In the test, the test piece is pressed until the test piece breaks. Next, a number (n) of the expanded beads present on the fracture surface of the expanded bead molded body and a number (b) of the expanded beads of which the material is broken are measured, and a ratio (b/n) of (b) to (n) expressed in percentage is determined as the fusion-bonding ratio (%).

(Amount of Talc Present in Surface Portion of Expanded Bead Molded Body)

Talc is present in the surface portion of the expanded bead molded body, and the amount of talc present is preferably 600 ppm by mass or more and 9000 ppm by mass or less. When the amount of talc falls within the above-described range, the expanded bead molded body has good charged voltage characteristics. The surface portion of the expanded bead molded body is generally assumed to be a portion within a range of about 20 μm inward from the surface.

(Polypropylene-based Resin Expanded Bead)

The polypropylene-based resin expanded beads of the present invention are those that can be used for producing an expanded bead molded body. The expanded bead molded body can be obtained by in-mold molding using the polypropylene-based resin expanded beads of the present invention. Specifically, the molded body can be produced by performing a molding step of filling a large number of expanded beads into a mold and supplying a heating medium such as steam to fusion-bond the expanded beads to each other. That is, the expanded bead molded body can be obtained by in-mold molding of the expanded beads. Talc is present in the surface portion of the expanded bead molded body of the present invention, and such a molded body can be obtained by in-mold molding using expanded beads in which talc is present in the surface portion, as described later.

For the description of the expanded beads of the present invention, descriptions of conventionally known expanded beads can be employed. The expanded beads of the present invention may have a single-layer structure or a multilayer structure. In the expanded beads having the single-layer structure (sometimes referred to as "single-layer expanded bead"), the single-layer foamed layer need only be formed of a polypropylene-based resin to be described later. In the expanded beads having a multilayer structure (sometimes referred to as multilayer expanded bead), the core layer need only be formed of a polypropylene-based resin to be described later.

(Foamed Layer)

When the polypropylene-based resin expanded beads of the present invention are single-layer expanded beads, the base resin of the single-layer expanded beads is composed of a polypropylene-based resin. When the expanded beads of the present invention are multilayer expanded beads, the base resin of the core layer of the expanded bead is composed of a polypropylene-based resin. Examples of the polypropylene-based resin include a propylene homopolymer and a propylene-based copolymer containing 50% by mass or more of a structural unit derived from propylene. Examples of the polypropylene-based copolymer include copolymers of propylene and ethylene or an α-olefin having 4 or more carbon atoms, such as a propylene-ethylene copolymer, a propylene-butene copolymer, and a propylene-ethylene-butene copolymer, and a propylene-maleic anhydride copolymer. These copolymers may be any of block copolymers, random copolymers, and graft copolymers. The polymer may be crosslinked, but is preferably not crosslinked. In the present specification, the "base resin" of a certain specific structure refers to a polymer component among the components constituting the structure. Examples of the "certain specific structure" include any layer of a foamed layer constituting a single-layer expanded bead, a core layer constituting a multilayer expanded bead, and a cover layer constituting a multilayer expanded bead.

The base resin constituting the single-layer expanded bead or the core layer of the multilayer expanded bead may contain, in addition to the polypropylene-based resin, another resin or another resin material such as an elastomer as long as the object and advantageous effects of the present invention are achieved. Examples of other resin materials include thermoplastic resins other than polypropylene-based resins and/or elastomers. As the thermoplastic resin other than the polypropylene-based resin, at least one resin selected from a polyethylene-based resin, a polystyrene-based resin, a polyamide-based resin, a polyester-based resin, and the like can be used. As the elastomer, an olefin-based thermoplastic elastomer and/or a styrene-based thermoplastic elastomer can be used.

A ratio of the polypropylene-based resin in the base resin is 50% by mass or more, preferably 70% by mass or more, more preferably 80% by mass or more, and even more preferably 90% by mass or more. It is particularly preferable that the resin component in the base resin be composed of the polypropylene-based resin.

A melting point Tmc of the polypropylene-based resin constituting the single-layer expanded bead or the core layer of the multilayer expanded bead is preferably 120°C or higher and 160°C or lower. In this case, an expanded bead molded body excellent in mechanical properties can be stably obtained while the in-mold moldability of the expanded beads (moldability at the time of performing the in-mold molding method) is enhanced. From the viewpoint of enhancing the in-mold moldability of the expanded beads and from the viewpoint of enhancing the mechanical properties of the obtained molded body, the melting point Tmc of the polypropylene-based resin constituting the single-layer expanded bead or the core layer of the multilayer expanded bead is preferably 130°C or higher, and more preferably 135°C or higher. From the viewpoint of enhancing the in-mold moldability under a low molding pressure condition, the melting point Tmc of the polypropylene-based resin constituting the single-layer expanded bead or the core layer of the multilayer expanded bead is preferably 155°C or lower, more preferably 153°C or lower, and still more preferably 150°C or lower. The numerical range of the melting point Tmc of the polypropylene-based resin may be, for example, a range (numerical range of the lower limit value or more and the upper limit value or less) in which any one value selected from the group consisting of 120°C, 130°C, and 135°C is set as the lower limit value and any one value selected from the group consisting of 155°C, 153°C, and 150°C is set as the upper limit value.

In the present specification, the melting point of the polypropylene-based resin is determined in accordance with JIS K7121:1987. Specifically, "(2) the case of measurement of melting temperature after a certain heat treatment" is adopted as the condition adjustment. A DSC curve is obtained by increasing the temperature of a test piece made of the polypropylene-based resin, which has been subjected to the condition adjustment, from 30°C to 200°C at a heating rate of 10°C/min, and the peak maximum temperature of the melting peak is defined as the melting point. When a plurality of melting peaks appear in the DSC curve, the peak maximum temperature of the melting peak having the largest area is defined as the melting point.

(Multilayer Expanded Bead)

When the polypropylene-based resin expanded beads of the present invention are multilayer expanded beads, the multilayer expanded beads each have an foamed core layer (core layer in a foamed state) and a cover layer, and the cover layer is a layer that covers the entirety or part of the foamed core layer. Examples of the multilayer expanded beads include those having a so-called sheath-core structure. The cover layer is preferably a layer that enables "in-mold molding of a good multilayer expanded bead molded body that is equivalent to a good single-layer expanded bead molded body and that can be obtained at a steam pressure lower than "the minimum steam pressure at which an expanded bead molded body in which single-layer expanded beads are well fusion-bonded with each other (that is, a good single-layer expanded bead molded body) is obtained when expanded beads composed of a single-layer foamed layer having no cover layer (that is, single-layer expanded beads) are in-mold molded". The expanded bead molded body in which the expanded beads are well fusion-bonded to each other means that the value of the fusion-bonding ratio of the molded body is 80% or more, preferably 85% or more, and more preferably 90% or more. The method for measuring the fusion-bonding ratio of the molded body is as described above. The cover layer is preferably made of a resin that can be fusion-bonded to each other at a temperature (specifically, at a low steam pressure) lower than that of the resin constituting the foamed core layer. Examples of the resin constituting the cover layer include a resin having a melting point lower than that of the resin constituting the core layer and a resin having a lower softening point than that of the resin constituting the core layer.

(Cover layer)

Examples of the base resin of the cover layer include a polyolefin-based resin. Examples of the polyolefin-based resin include polyethylene-based resins such as a linear low-density polyethylene, a low-density polyethylene, and a high-density polyethylene, polypropylene-based resins such as a propylene-ethylene copolymer, a propylene-butene copolymer, and a propylene-ethylene-butene copolymer, and mixtures thereof. From the viewpoint of excellent adhesiveness to the foamed core layer, the polyolefin-based resin of the cover layer is preferably a polypropylene-based resin and/or a polyethylene-based resin, and more preferably a polypropylene-based resin. When the base resin constituting the cover layer is a polypropylene resin, the base resin is more preferably at least one selected from a propylene-ethylene copolymer, a propylene-butene copolymer, and a propylene-ethylene-butene copolymer. In addition, the cover layer composed of a polypropylene-based resin and/or a polyethylene-based resin further improves the adhesiveness between the foamed core layer and the cover layer, and makes it possible to stably obtain a molded body having good mechanical properties. The base resin composed of at least one selected from the group consisting of a propylene-ethylene copolymer, a propylene-butene copolymer, and a propylene-ethylene-butene copolymer may be composed of a single copolymer or a mixture of a plurality of copolymers. Furthermore, from the viewpoint of the fusion bondability, adhesiveness, and the like, those obtained using a metallocene polymerization catalyst are preferable.

When the base resin constituting the cover layer is a polyolefin-based resin, a melting point Tms (°C) of the polyolefin-based resin is preferably lower than the melting point Tmc (°C) of the polypropylene-based resin constituting the core layer in a foamed state, for example. That is, it is preferable that the condition of Tms < Tmc be met. In this case, the fusion bondability between the expanded beads during molding is improved, and a molded body having excellent fusion bondability can be produced at a low temperature (specifically, at a low steam pressure) during in-mold molding. From the viewpoint of further improving this effect, it is preferable that the condition of Tmc - Tms ≥ 1 (°C) be met, more preferable that the condition of Tmc - Tms ≥ 3 (°C) be met, and still more preferable that the condition of Tmc - Tms ≥ 5 (°C) be met. From the viewpoint of further suppressing separation of the foamed core layer and the cover layer and also the adhesion of the resin to the mold during in-mold molding, it is preferable that the condition of Tmc - Tms ≤ 30 (°C) be met, more preferable that the condition of Tmc - Tms ≤ 25 (°C) be met, and still more preferable that the condition of Tmc - Tms ≤ 20 (°C) be met. The numerical range of Tmc - Tms may be, for example, a range (numerical range of the lower limit value or more and the upper limit value or less) in which any one value selected from the group consisting of 1 (°C), 3 (°C), and 5 (°C) is set as the lower limit value, and any one value selected from the group consisting of 30 (°C), 25 (°C), and 20 (°C) is set as the upper limit value.

From the viewpoint of suppressing adhesion of the resin to the mold during in-mold molding, the melting point Tms of the polyolefin-based resin constituting the cover layer is preferably 100°C or higher, more preferably 110°C or higher, and still more preferably 120°C or higher. On the other hand, from the viewpoint of enhancing the fusion bondability of the expanded beads during molding, the melting point Tms of the polyolefin-based resin constituting the cover layer is preferably 150°C or lower, more preferably 145°C or lower, and still more preferably 140°C or lower. The melting point of the polyolefin resin constituting the cover layer is determined in accordance with JIS K7121:1987. Specifically, the melting point is determined by the same conditions and method as those for the polypropylene-based resin constituting the foamed core layer to be described later. The numerical range of the melting point Tms of the polyolefin-based resin constituting the cover layer may be, for example, a range (numerical range of the lower limit value or more and the upper limit value or less) in which any one value selected from the group consisting of 100°C, 110°C, and 120°C is set as the lower limit value and any one value selected from the group consisting of 150°C, 145°C, and 140°C is set as the upper limit value.

When the expanded bead of the present invention is a multilayer expanded bead, a ratio of the cover layer in the expanded bead is preferably 0.5% by mass or more and 15% by mass or less. In this case, an expanded bead molded body excellent in mechanical properties can be stably obtained while the in-mold moldability of the expanded beads (moldability at the time of performing the in-mold molding method) is enhanced. From the viewpoint of improving the effect of being excellent in the balance between the in-mold moldability and the mechanical properties, the mass ratio of the cover layer in the expanded bead is more preferably 1% by mass or more and 10% by mass or less, and still more preferably 2% by mass or more and 8% by mass or less. The numerical range indicating the ratio of the cover layer in the expanded bead may be, for example, a range (numerical range of the lower limit value or more and the upper limit value or less) in which any one value selected from the group consisting of 0.5% by mass, 1% by mass, and 2% by mass is set as the lower limit value, and any one value selected from the group consisting of 15% by mass, 10% by mass, and 8% by mass is set as the upper limit value.

When the expanded bead of the present invention is the multilayer expanded bead, the foamed core layer is composed of a polypropylene-based resin in a foamed state, and the cover layer is composed of a polyolefin-based resin in a foamed state or a non-foamed state. The cover layer is preferably in a substantially non-foamed state. "Substantially non-foamed" means that there is almost no cellular structure.

(Carbon materials)

The expanded beads of the present invention contain carbon materials. The carbon materials are used to color the expanded beads in gray, black, or a mottled pattern thereof, or to add functionality to the expanded beads. When the expanded bead is a single-layer expanded bead, the amount of the carbon materials in the expanded bead is preferably 0.1% by mass or more and 5% by mass or less, more preferably 0.5% by mass or more and 4% by mass or less, and still more preferably 1% by mass or more and 3% by mass or less. When the expanded bead is a single-layer expanded bead, the numerical range indicating the amount of the carbon materials in the expanded bead may be, for example, a range (numerical range of the lower limit value or more and the upper limit value or less) in which any one value selected from the group consisting of 0.1% by mass, 0.5% by mass, and 1% by mass is set as the lower limit value, and any one value selected from the group consisting of 5% by mass, 4% by mass, and 3% by mass is set as the upper limit value. On the other hand, when the expanded bead is a multilayer expanded bead, at least the cover layer preferably contains carbon materials. Coexistence of the carbon materials and talc in the surface portion of the multilayer expanded bead makes it easier to obtain a molded body having both electrostatic chargeability and good appearance. In this case, the amount of the carbon materials in the cover layer is preferably 0.1% by mass or more and 5% by mass or less, more preferably 0.5% by mass or more and 4% by mass or less, and still more preferably 1% by mass or more and 3% by mass or less. When the expanded bead is a multilayer expanded bead, the numerical range indicating the amount of the carbon materials in the cover layer may be, for example, a range (numerical range of the lower limit value or more and the upper limit value or less) in which any one value selected from the group consisting of 0.1% by mass, 0.5% by mass, and 1% by mass is set as the lower limit value and any one value selected from the group consisting of 5% by mass, 4% by mass, and 3% by mass is set as the upper limit value. Furthermore, the foamed core layer may also contain carbon materials. In this case, the amount of the carbon materials in the foamed core layer is preferably 0.1% by mass or more and 5% by mass or less, more preferably 0.5% by mass or more and 4% by mass or less, and still more preferably 1% by mass or more and 3% by mass or less. The numerical range indicating the amount of the carbon materials in the foamed core layer may be, for example, a range (numerical range of the lower limit value or more and the upper limit value or less) in which any one value selected from the group consisting of 0.1% by mass, 0.5% by mass, and 1% by mass is set as the lower limit value and any one value selected from the group consisting of 5% by mass, 4% by mass, and 3% by mass is set as the upper limit value. The amounts of the carbon materials in the single-layer expanded bead and in the core layer and the cover layer of the multilayer expanded bead are substantially the same as the blending amounts of the carbon materials in the single-layer resin bead and in the core layer and the cover layer of the multilayer resin bead during the production of the expandable resin beads.

The amount of the carbon materials contained in the expanded bead and the molded body thereof can be quantified by the TG-DTA method. Specifically, a sample cut out from the expanded bead or the in-mold molded body is used as a measurement sample (sample for measurement), and the weighed sample is heated from 40°C to 600°C in a nitrogen atmosphere. Next, the heating temperature of the sample is lowered to 400°C, the atmosphere gas is changed from nitrogen to air, and the sample is heated to 800°C. The weight loss of the sample when heated to 600°C in the nitrogen atmosphere is defined as the amount of organic matters, and the weight loss of the sample when heated to 800°C in the air atmosphere, which has been changed from the nitrogen atmosphere, is defined as the amount of carbon materials. When the amount of the cover layer is measured, the amount can be measured by the same method using a sample obtained by scraping a target portion.

As the carbon materials, at least one carbon powder selected from carbon black, carbon nanotube, graphite, graphene, carbon nanofiber, carbon microfiber, carbon microcoil, and carbon nanocoil may be mentioned. Examples thereof to be used include channel black, roller black, furnace black, thermal black, acetylene black, SWCNT (Single-Walled Carbon Nano Tube), MWCNT (Multi-Walled Carbon Nano Tube), and branched MWCNT. Among these, furnace black is preferable as the carbon materials used for the expanded beads because it is excellent in the balance between the dispersibility in the polypropylene-based resin and the material cost.

A conventional expanded bead molded body obtained by in-mold molding of expanded beads containing carbon materials has had a problem in that it is difficult for the expanded bead molded body to exhibit electrostatic charging capabilities due to poor insulation properties, and also has an object that the electrostatic chargeability should be improved. Therefore, the present inventors have solved the problem by providing a specific amount of talc on or near the surface of the expanded beads.

(Talc)

Talc is present in the surface portion of the expanded bead molded body of the present invention. In addition, when the expanded beads that are constituted such that talc is present on or near the surfaces of the expanded beads are subjected to in-mold molding to obtain a molded body, the expanded bead molded body can exhibit good physical properties as a molded body while exhibiting predetermined charged voltage characteristics. The talc preferably contains a magnesium silicate component in a content ratio of preferably 20% or more, more preferably 50% or more, still more preferably 80% or more. The content ratio can be calculated, for example, by performing various composition analyses. When the talc is present on or near the surface of the expanded bead, the number average particle diameter of the talc determined using the maximum length on a micrograph as a representative diameter is preferably 0.01 $\mu$m to 30 $\mu$m, particularly preferably 0.01 $\mu$m to 10 $\mu$m. The layer charge of the talc is preferably 0$\pm$0.5, more preferably 0.

(Mode of Presence of Talc)

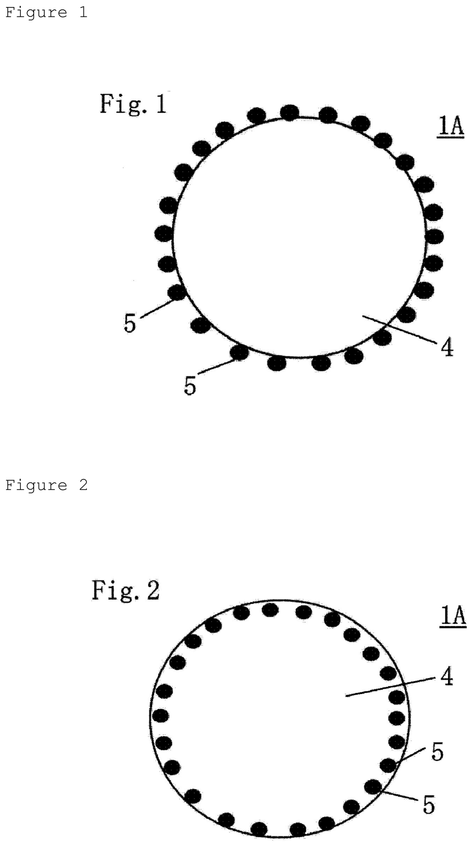

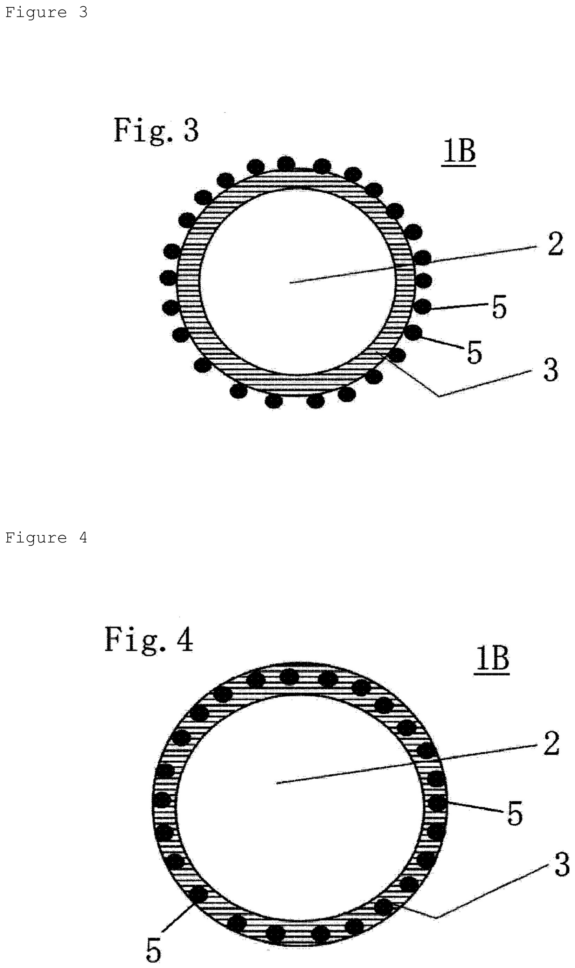

In the expanded beads, examples of modes in which talc is present in the surface portion of the expanded bead include a mode in which talc adheres to the surface of the expanded bead, a mode in which talc is contained in the expanded bead at least near the surface, and a mode in which talc adheres thereto and also is contained therein. Specifically, the modes of Figs. 1 to 4 are shown as examples, although the present invention is not limited to these modes. Figs. 1 and 2 are each a cross-sectional view of a general single-layer expanded bead, and Figs. 3 and 4 are each a cross-sectional view of a multilayer expanded bead. A single-layer expanded bead 1A shown in Figs. 1 and 2 has a foamed layer 4 and talc 5. In Fig. 1, the talc 5 adheres to the surface of the single-layer expanded bead 1A. In Fig. 2, the talc 5 is contained in a portion near the surface of the single-layer expanded bead 1A. A multilayer expanded bead 1B shown in Figs. 3 and 4 has a core layer 2 in a foamed state and a cover layer 3. The cover layer 3 covers the core layer 2. In addition, the multilayer expanded bead 1B has talc 5. In Fig. 3, the talc 5 adheres to the surface of the multilayer expanded bead 1B. In Fig. 2, the talc 5 is contained in the cover layer 3 of the single-layer expanded bead 1B. The core layer in a foamed state of the expanded bead is appropriately referred to as a "foamed core layer." The shape of the expanded beads in Figs. 1 to 4 is, for example, a cylindrical shape or a spherical shape. The concept of a cylindrical shape includes a slightly rounded shape, and concept of a spherical shape includes not only a shape having a perfect circle in cross section but also a shape having an ellipse, a circle, or a shape close to an ellipse. Furthermore, the expanded beads of the present invention also include those having a tubular or concave outer shape portion having a hollow portion.

As described above, in both of the single-layer expanded beads and the multilayer expanded beads, examples of the modes in which talc is present on or near the surface of the expanded bead include (1) a mode in which talc adheres to the expanded bead (Figs. 1 and 3) and (2) a mode in which talc is contained in the expanded bead near the surface (Figs. 2 and 4), as described above with reference to Figs. 1 to 4. In addition, the mode (1) and the mode (2) may coexist.

(1) Adhesion

In the case of the single-layer expanded bead, it is preferable to make talc adhere to the surface of the expanded bead (Fig. 1) in order to provide talc on the surface of the expanded bead. In the case of the multilayer expanded bead, it is preferable to make talc adhere to the surface of the multilayer expanded bead, that is, the surface of the cover layer (Fig. 3).

In addition, both an adhering amount of talc to the surface of the single-layer expanded bead shown in Fig. 1 and an adhering amount of talc to the surface of the multilayer expanded bead shown in Fig. 3 can be adjusted as described in Examples of the present specification. That is, the amount of talc present in the surface portion of the expanded bead can be adjusted as described in Examples of the present specification. Specifically, based on the positive correlation between the amount of talc added to the dispersion medium in a sealed container and the adhering amount of talc to the surface of the obtained expanded bead, the amount of talc can be adjusted by conducting experiments several times. A tentative standard of the addition amount of talc is in a range of 0.05 parts by mass or more and 15 parts by mass or less relative to 100 parts by mass of the resin beads charged into the dispersion medium in the sealed container. When talc is added to the dispersion medium, a known dispersant or surfactant may be used in combination.

(Adhering amount of Talc)

The adhering amount of talc in the surface portion of the expanded bead is preferably 600 ppm by mass or more and 10000 ppm by mass or less, more preferably 700 ppm by mass or more and 8000 ppm by mass or less, and still more preferably 900 ppm by mass or more and 7000 ppm by mass or less. The numerical range indicating the adhering amount of talc in the surface portion of the expanded bead may be, for example, a range (numerical range of the lower limit value or more and the upper limit value or less) in which any one value selected from the group consisting of 600 ppm by mass, 700 ppm by mass, and 900 ppm by mass is set as the lower limit value, and any one value selected from the group consisting of 10000 ppm by mass, 8000 ppm by mass, and 7000 ppm by mass is set as the upper limit value.

(2) Content

In the case of the single-layer expanded bead, it is preferable that talc be kneaded into the base resin of the expanded bead so as to be contained at least near the surface (Fig. 2). In the case of the multilayer expanded bead, it is preferable that talc be kneaded into at least the base resin constituting the cover layer so as to be contained in the cover layer of the expanded bead (Fig. 4). The range of the surface portion in Fig. 2 is appropriately determined depending on the type and amount of talc present, the intended electrostatic charging capabilities, and the like, and may be taken as a range extending inward from the surface of the expanded bead by approximately 20 μm. The amount of talc contained in the surface portion of the single-layer expanded bead shown in Fig. 2 and the amount of talc contained in the cover layer of the multilayer expanded bead shown in Fig. 4 are both substantially the same as the amount of talc blended in the base resin during the production of the expandable resin beads. That is, the amount of talc present in the surface portion of the expanded bead is substantially the same as the blending amount of talc in the base resin during the production of the expandable resin beads.

(Amount of Talc)

An amount of talc contained in the surface portion of the expanded bead is preferably 600 ppm by mass or more and 10000 ppm by mass or less, more preferably 700 ppm by mass or more and 9000 ppm by mass or less, and still more preferably 900 ppm by mass or more and 8000 ppm by mass or less. When the amount of the talc contained therein falls within the above-described numerical range, the amount of talc present in the surface portion of the expanded bead can be adjusted to fall within the preferred range. The expanded bead molded body obtained from the expanded beads containing carbon materials can exhibit sufficient electrostatic charging capabilities. In addition, when the amount of talc present in the surface portion of the expanded bead is adjusted to fall within the preferred range, the fusion bondability between the expanded beads can be sufficiently maintained even during in-mold molding of the expanded beads. The numerical range indicating the amount of talc contained in the surface portion of the expanded bead may be, for example, a range (numerical range of the lower limit value or more and the upper limit value or less) in which any one value selected from the group consisting of 600 ppm by mass, 700 ppm by mass, and 900 ppm by mass is set as the lower limit value, and any one value selected from the group consisting of 10000 ppm by mass, 8000 ppm by mass, and 7000 ppm by mass is set as the upper limit value.

(Measurement of Amount of Talc Present in Surface Portion of Expanded Bead)

The amount of talc present in the surface portion of the expanded bead in the present invention can be measured as follows. For example, a calibration curve of talc is measured in advance using attenuated total reflection spectroscopy (ATR method), and the amount of talc present on or near the surface of the expanded bead can be measured based on the calibration curve.

For example, the amount of talc present in the surface portion of the expanded bead can be measured by the following method. First, a resin test piece having a known talc amount is prepared. Next, the surface portion of the resin test piece is measured by attenuated total reflection spectroscopy (ATR method) using an infrared spectrophotometer to obtain an infrared light absorption spectrum of the resin test piece. Next, the peak wavelengths derived from talc are confirmed from the infrared absorption spectrum of the resin test piece, and the absorption intensities at the peak wavelengths are obtained. Specifically, the peak wavelengths derived from talc are present in the vicinities of 1000 cm$^{-1}$ and 650 cm$^{-1}$. A calibration curve from which the amount of talc present in the surface portion of the expanded bead can be calculated is prepared based on the relationship between the amount of talc contained in the resin test piece and the absorption intensities at the peak wavelengths derived from talc.

Separately, the expanded bead to be measured is cut into two equal parts. The cut surface of the expanded bead (that is, the inside of the expanded bead) to be measured is similarly measured by the ATR method to obtain an infrared absorption spectrum of the cut surface. Then, based on the infrared absorption spectrum of the cut surface, the absorption intensities at the same wavelengths as the peak wavelengths (the wavelengths specified from the infrared absorption spectrum of the resin test piece as the peak wavelengths derived from talc) are obtained.

Next, the surface portion of the expanded bead is measured by attenuated total reflection spectroscopy (ATR method) to obtain an infrared absorption spectrum of the surface portion of the expanded bead. Then, based on the infrared absorption spectrum of the surface portion of the expanded bead, the absorption intensities at the peak wavelengths derived from talc are measured.

The difference between the absorption intensity based on the infrared absorption spectrum of the surface portion of the expanded bead and the absorption intensity based on the infrared absorption spectrum of the cut surface is calculated.

The amount of talc present in the surface portion of the expanded bead can be calculated from the relationship between the calculated difference and the calibration curve. When an inorganic powder or the like other than talc adheres to the surface of the expanded beads, the amount of talc contained therein can be measured after removing the inorganic powder or the like.

The difference may be specified based on a spectrum (difference spectrum) of a difference between the infrared absorption spectrum of the surface portion of the expanded bead and the infrared absorption spectrum of the cut surface. That is, after obtaining the difference spectrum, the absorption intensities at the same wavelengths as the wavelengths specified from the infrared light absorption spectrum of the resin test piece as the peak wavelengths derived from talc may be read based on the difference spectrum, and the read absorption intensities may be used as the difference value.

Although the method for determining the amount of talc present in the surface portion of the expanded bead (amount of talc present) has been described above, the same method can be applied to the case of determining the amount of talc present in the surface portion of a molded body molded from the expanded beads. That is, the expanded bead used in the method for determining the amount of talc present in the surface portion of the expanded bead (amount of talc present) may be replaced with a molded body as the measurement target.

(Amount of Talc Present)

An amount of talc present in the surface portion of the expanded bead is a value calculated as the sum of the adhering amount and the contained amount of talc, and is preferably 600 ppm by mass or more and 10000 ppm by mass or less, more preferably 650 ppm by mass or more and 9000 ppm by mass or less, and still more preferably 700 ppm by mass or more and 8000 ppm by mass or less. The numerical range indicating the amount of talc present in the surface portion of the expanded bead may be, for example, a range (numerical range of the lower limit value or more and the upper limit value or less) in which any one value selected from the group consisting of 600 ppm by mass, 650 ppm by mass, and 700 ppm by mass and any one value selected from the group consisting of 10000 ppm by mass, 9000 ppm by mass, and 8000 ppm by mass is set as the upper limit value.

In the case where talc adheres to the expanded bead and is contained therein (or in the case where it is unclear whether talc adheres to the expanded bead or is contained therein), the amount can be measured as the sum of the adhering amount and the contained amount by adopting the method for measuring the contained amount without performing the operation of removing the adhering talc.

As for the analysis for determining whether or not the adhering component or the contained component is talc, for example, it is possible to determine whether or not the adhering component or the contained component is talc by separately performing shape observation or composition analysis by appropriately combining scanning electron microscope observation, infrared spectroscopic analysis, fluorescent X-ray analysis, and the like. When components other than talc are present, the adhering amount and the contained amount can be calculated by subtracting the components other than talc.

(Method for Measuring Amount of Talc Present in Molded Body of Expanded Beads)

In the expanded bead molded body, the amount of talc present in the surface portion (the surface portion refers to a range from the surface to 20 $\mu$m inside) in the expanded bead molded body can also be quantified by the method using an infrared spectrophotometer or the like in the same manner as in the method for measuring talc in the expanded bead described above.

For example, when talc adheres to and/or is contained in the surface of the expanded bead molded body, the amount of talc present in the molded body can be measured as the sum of the adhering amount and the contained amount of talc.

(Ratio of Talc to Carbon Materials)

In order to further improve the electrostatic charging capabilities of the expanded beads of the present invention, a mass ratio (CB/amount of talc) of the amount of talc present on or near the surface of the expanded bead (amount of talc) to the amount of the carbon materials (CB) contained in the expanded bead is preferably 2.5 to 100, more preferably 3 to 50. The numerical range indicating the mass ratio of the amount of talc present on or near the surface of the expanded bead (amount of talc) to the amount of carbon materials (CB) contained in the expanded bead may be, for example, a range (numerical range of the lower limit value or more and the upper limit value or less) in which any one value selected from the group consisting of 2.5 and 3 is set as the lower limit value and any one value selected from the group consisting of 100 and 50 is set as the upper limit value or less).

(Other Additives)

The expanded beads of the present invention may contain an additive. Specific examples of the additive include a flame retardant, a flame retardant aid, a cell controlling agent, an antioxidant, a weathering agent, and a crystal nucleating agent. The additive may be contained in the entire expanded beads or only in a part of the expanded beads. Specifically, the above-described additive can be contained in the entire single-layer expanded beads, the entire multilayer expanded beads, or only the cover layer of the multilayer expanded beads.

(Bulk Density of Expanded beads)

The expanded beads preferably have a bulk density of 10 kg/m$^3$ or more and 500 kg/m$^3$ or less. When the bulk density falls within this range, the weight of the molded body can be reduced while the rigidity of the molded body is increased. From the viewpoint of improving the effect of excellent balance between rigidity and weight reduction, the bulk density of the expanded beads is more preferably 15 kg/m$^3$ or more and 100 kg/m$^3$ or less, and still more preferably 18 kg/m$^3$ or more and 50 kg/m$^3$ or less. The numerical range indicating the bulk density of the expanded beads include, for example, a range (numerical range of the lower limit value or more and the upper limit value or less) in which any one value selected from the group consisting of 10 kg/m$^3$ 15 kg/m$^3$, and 18 kg/m$^3$ is set as the lower limit value and any one value selected from the group consisting of 500 kg/m$^3$, 100 kg/m$^3$, and 50 kg/m$^3$ is set as the upper limit value.

The bulk density of the expanded beads is measured by the following method. First, a plurality of expanded beads (expanded bead group) to be subjected to measurement are left to stand in an environment of a temperature of 23°C, a relative humidity of 50%, and 1 atm for 24 hours or longer. Thereafter, the expanded bead group having a mass W (unit: g) is filled into a measuring cylinder, and a floor surface is lightly tapped by the bottom surface of the measuring cylinder several times to stabilize the filling height of the expanded bead group in the measuring cylinder. The bulk volume V (unit: L) of the expanded bead group indicated by the scale of the measuring cylinder is read, and the mass W of the expanded bead group is divided by the bulk volume V of the expanded bead group (that is, W/V). The bulk density (unit: kg/m$^3$) of the expanded beads can be obtained by converting the value thus obtained into units of kg/m$^3$.

(High-Temperature Peak)

The expanded beads preferably have a crystal structure in which a melting peak intrinsic to the polypropylene-based resin (that is, a resin-intrinsic peak) and one or more melting peaks on the higher temperature side thereof (that is, high-temperature peaks) appear on a DSC curve obtained when the expanded beads are heated from 23°C to 200°C at a heating rate of 10°C/min. The DSC curve is obtained by performing differential scanning calorimetry (DSC) in accordance with JIS K7121 1987 using 1 to 3 mg of expanded beads as a test sample.

The resin-intrinsic peak is an endothermic peak produced by the melting of crystals specific to the polypropylene-based resin constituting the expanded beads and is considered to be produced by heat absorption during the melting of crystals that the polypropylene-based resin usually has. On the other hand, the endothermic peak on the higher temperature side of the resin-intrinsic peak (that is, the high-temperature peak) is an endothermic peak appearing on the higher temperature side relative to the resin-intrinsic peak in the DSC curve. When this high-temperature peak appears, it is presumed that a secondary crystal component having a higher melting point is present in the resin. In the DSC curve obtained by heating from 23°C to 200°C at a heating rate of 10°C/min (that is, the first heating), then cooling from 200°C to 23°C at a cooling rate of 10°C/min, and then heating again from 23°C to 200°C at a heating rate of 10°C/min (that is, the second heating) as described above, only an endothermic peak due to melting of crystals specific to the polypropylene-based resin constituting the expanded beads is observed, and thus the resin-intrinsic peak and the high-temperature peak can be distinguished. The temperature at the peak maximum of the resin-intrinsic peak may be slightly different between that at the first heating and that at the second heating, but the difference is usually within 5°C.

From the viewpoint that the moldability of the expanded beads can be further improved and the viewpoint that a molded body more excellent in rigidity can be obtained, the heat of fusion of the high-temperature peak of the expanded beads is preferably 5 J/g or more and 40 J/g or less, more preferably 7 J/g or more and 30 J/g or less, and still more preferably 10 J/g or more and 20 J/g or less. The total heat of fusion of the expanded beads is preferably 25 J/g or more and 150 J/g or less, more preferably 35 J/g or more and 100 J/g or less, and still more preferably 50 J/g or more and 90 J/g or less. The numerical range indicating the heat of fusion of the high-temperature peak of the expanded beads may be, for example, a range (numerical range of the lower limit value or more and the upper limit value or less) in which any one value selected from the group consisting of 5 J/g, 7 J/g, and 10 J/g is set as the lower limit value and any one value selected from the group consisting of 40 J/g, 30 J/g, and 20 J/g is set as the upper limit value. The numerical range indicating the total heat of fusion of the expanded beads may be, for example, a range (numerical range of the lower limit value or more and the upper limit value or less) in which any one value selected from the group consisting of 25 J/g, 35 J/g, and 50 J/g is set as the lower limit value and any one value selected from the group consisting of 150 J/g, 100 J/g, and 90 J/g is set as the upper limit value.

(Method for Measuring High-Temperature Peak)

The heat of fusion of each peak in the DSC curve of the expanded bead is a value determined as follows. First, an expanded bead with about 2 to 4 mg is collected from the dried expanded bead group. The collected expanded bead is used as a test piece, and a DSC curve is obtained by heating the test piece from 23°C to 200°C at a heating rate of 10°C/min using a differential scanning calorimeter. A plurality of expanded beads may be used as a test piece. In the DSC curve, a resin-intrinsic peak ΔH1 and a high-temperature peak ΔH2 having a peak maximum on a higher temperature side relative to the peak maximum of the resin-intrinsic peak ΔH1 appear.

Next, a straight line L1 is obtained by connecting a point α at a temperature of 80°C on the DSC curve and a point β at the melting end temperature T of the expanded bead. Next, a straight line L2 parallel to the vertical axis of the graph is drawn from a point γ on the DSC curve, which corresponds to a valley between the resin-intrinsic peak ΔH1 and the high-temperature peak ΔH2, and an intersection point between the straight line L1 and the straight line L2 is denoted by δ. The point γ can also be referred to as a local maximum point present between the resin-intrinsic peak ΔH1 and the high-temperature peak ΔH2.

An area of the resin-intrinsic peak ΔH1 is an area of a portion surrounded by the curve of the resin-intrinsic peak ΔH1 portion of the DSC curve, the line segment α-δ, and the line segment γ-δ, and is defined as the heat of fusion of the resin-intrinsic peak.

An area of the high-temperature peak ΔH2 is an area of a portion surrounded by the curve of the high-temperature peak ΔH2 portion of the DSC curve, the line segment δ-β, and the line segment γ-δ, and is defined as the heat of fusion of the high-temperature peak (that is, the heat of the high-temperature peak).

An area of a total melting peak is an area of a portion surrounded by the curve of the resin-intrinsic peak ΔH1 portion and the curve of the high-temperature peak ΔH2 portion of the DSC curve, and the line segment α-β (that is, the straight line L1), and is defined as the heat of fusion of the total melting peak (total heat of fusion).

(Method for Producing Expanded Beads)

Next, an example of a method for producing expanded beads will be described. The expanded beads can be produced by a process including a resin bead production step, a dispersion step, a blowing agent impregnation step, and a foaming step. In the dispersion step, the polypropylene-based resin beads are dispersed in an aqueous medium in a container. In the blowing agent impregnation step, the polypropylene-based resin beads are impregnated with a blowing agent in the container. In the foaming step, the polypropylene-based resin beads containing the blowing agent (i.e., expandable resin beads) are discharged from the container together with the aqueous medium and foamed. Hereinafter, an embodiment of the production method will be specifically described.

(Production of Resin Beads)

The production of single-layer resin beads is well known, and the production of multilayer resin beads is carried out, for example, as follows. Two extruders, i.e., an extruder for forming a core layer and an extruder for forming a cover layer, are connected to a co-extrusion die. In the extruder for forming a core layer, a polypropylene-based resin for forming a core layer and additives supplied as necessary are melt-kneaded to prepare a melt of a resin composition for forming a core layer. On the other hand, in the extruder for forming a cover layer, a polyolefin-based resin for forming a cover layer, carbon materials, talc supplied as necessary, and other additives supplied as necessary are melt-kneaded to prepare a melt of a resin composition for forming a cover layer. Then, the respective melts are extruded and joined in the die to form a sheath-core type composite composed of a core layer in a non-foamed state and a cover layer in a non-foamed state covering the outer surface of the core layer by coextrusion. In the composite, the core layer is composed of the resin composition for forming a core layer, and the cover layer is composed of the resin composition for forming a cover layer. Next, the composite is extruded from the extruder and pelletized by various cutting methods using a pelletizer or the like. The cutting method can be selected from a strand cutting method, a hot cutting method, an underwater cutting method, and the like. In this manner, multilayer resin beads including the core layer and the cover layer that covers the core layer can be obtained.

When talc is contained in the expanded beads, in the production process of the resin beads, talc is preferably added to the resin for forming the expanded beads in the case of the single-layer resin beads, or talc is preferably added to the resin for forming the cover layer in the case of the multilayer resin beads.

(Resin Beads)

A particle diameter of the single-layer resin bead or the multilayer resin bead is preferably 0.1 mm to 3.0 mm, more preferably 0.3 mm to 1.5 mm. A length/outer diameter ratio of the resin bead is preferably 0.5 to 5.0, more preferably 1.0 to 3.0. An average mass per single-layer resin bead or multilayer resin bead (determined from the mass of 200 randomly selected particles) is adjusted to preferably become 0.1 mg to 20 mg, more preferably 0.2 mg to 10 mg, still more preferably 0.3 mg to 5 mg, and particularly preferably 0.4 mg to 2 mg. A mass ratio between the core layer and the cover layer in the multilayer resin bead (specifically, the mass of the core layer (parts by mass): the mass of the cover layer (parts by mass)) is preferably 99.5:0.5 to 90:10, more preferably 99:1 to 92:8, and still more preferably 98:2 to 94:6, provided that the total of the mass of the core layer and the mass of the cover layer is 100. Therefore, the numerical range indicating the particle diameter of the single-layer resin bead or the multilayer resin bead may be, for example, a range (numerical range of the lower limit value or more and the upper limit value or less) in which any one value selected from the group consisting of 0.1 mm and 0.3 mm is set as the lower limit value and any one value selected from the group consisting of 3.0 mm and 1.5 mm is set as the upper limit value. The numerical range indicating the length/outer diameter ratio of the resin bead may be, for example, a range (numerical range of the lower limit value or more and the upper limit value or less) in which any one value selected from the group consisting of 0.5 and 1.0 is set as the lower limit value and any one value selected from the group consisting of 5.0 and 3.0 is set as the upper limit value. The numerical range indicating the average mass per single-layer resin bead or multilayer resin bead may be, for example, a range (numerical range of the lower limit value or more and the upper limit value or less) in which any one value selected from the group consisting of 0.1 mg, 0.2 mg, 0.3 mg, and 0.4 mg is set as the lower limit value and any one value selected from the group consisting of 20 mg, 10 mg, 5 mg, and 2 mg is set as the upper limit value. Regarding the mass ratio between the core layer and the cover layer in the multilayer resin bead (specifically, the mass of the core layer (parts by mass): the mass of the cover layer (parts by mass)), the numerical range indicating the mass of the cover layer (parts by mass) may be, for example, a range (numerical range of the lower limit value or more and the upper limit value or less) in which any one value selected from the group consisting of 0.5, 1, and 2 is set as the lower limit value and any one value selected from the group consisting of 10, 8, and 6 is set as the upper limit value, provided that the total of the mass of the core layer and the mass of the cover layer is 100.

The particle diameter and the average mass of the multilayer resin bead are adjusted, for example, by cutting the resin melt while appropriately changing the extrusion speed, the take-up speed, the cutter speed, and the like when extruding the resin melt from the extruder.

(Irregularly Shaped Expanded Beads, Cylindrical Hole Shape, etc.)

Examples of the shape of the expanded bead of the present invention include the shape of the general cylindrical or spherical expanded bead described above and those having a hollow portion or a concave outer shape portion. By in-mold molding of the expanded beads having such a hollow portion or concave outer shape portion, the expanded bead molded body described in, for example, Japanese Patent Application Laid-Open No. Hei. 7-137063 and Japanese Patent Application Laid-Open No. 2006-307177 can be obtained. The expanded bead molded body obtained by in-mold molding of the expanded beads having a hollow portion or a concave outer shape portion has improved electrostatic charging capabilities, and an effect of being more excellent in achieving the intended purpose is thus obtained. Although the reason for improvement is not completely clear, the expanded bead used for molding having a relatively high specific surface area contribute to this effect. From the viewpoint of such an effect, it is preferable to employ expanded beads having a hollow portion or a concave outer shape portion as the shape of the expanded bead of the present invention. The expanded beads having a hollow portion refer to expanded beads having shapes typified by a bottomed cylindrical shape or a cylindrical shape having a through-hole. In addition, the expanded beads having a concave outer shape portion literally mean expanded beads having a concave portion on the outer shape (which can be visually confirmed) on the surface of the expanded beads, and those having a shape typified by expanded beads having a bottomed cylindrical shape or a C-shaped cross-sectional portion (portion) in which the side surface of a penetrating cylindrical shape is missing. The shape and hole diameter of the hollow portion or the recessed outer shape portion, the width of the side surface missing portion, and the like include those with specifications described in Japanese Patent Application Laid-Open No. Hei. 7-137063 and Japanese Patent Application Laid-Open No. 2006-307177. In addition, the shape and hole diameter of the hollow portion or the concave outer shape portion, the width of the side surface missing portion, and the like can be appropriately designed according to the technical ideas shown in the examples of increasing the specific surface area, forming voids communicating with the resulting expanded bead molded body, and reducing the molding pressure during in-mold molding, for example.

(Dispersion Step)

The dispersion step is a step of dispersing the polypropylene-based resin beads in an aqueous medium. As the polypropylene-based resin beads, known resin beads (single-layer resin beads) or multilayer resin beads having a core layer and a cover layer covering the core layer are used. The polypropylene-based resin beads having a core layer and a cover layer are appropriately referred to as "multilayer resin beads" in the present specification.

(Dispersion Medium)

An aqueous medium is used as a dispersion medium (specifically, a liquid) for dispersing the single-layer or multilayer resin beads in a sealed container. The aqueous medium is a dispersion medium (specifically, a liquid) containing water as a main component. The ratio of water in the aqueous medium is preferably 60% by mass or more, more preferably 70% by mass or more, still more preferably 80% by mass or more. Examples of the dispersion medium other than water in the aqueous medium include ethylene glycol, glycerin, methanol, and ethanol. The aqueous medium is particularly preferably water.

(Adhesion of Talc)

In the case of making the talc adhere to the expanded beads, it is preferable to add talc to an aqueous medium so that the amount of talc is 0.1 parts by mass or more and 15 parts by mass or less relative to 100 parts by mass of the resin beads and to disperse talc in the aqueous medium. The talc dispersed in the aqueous medium not only acts as an inorganic dispersant, but also remains on the surface of the expanded beads in the foaming step described later. Therefore, expanded beads in which the talc uniformly adheres to the surfaces of the expanded beads are obtained. When the resin beads contain talc and there is no need for talc to adhere to the expanded beads, talc need not be used as the inorganic dispersant.

(Dispersion)

In the dispersion step, as described above, other inorganic dispersants can be added to the aqueous medium in addition to talc. Inorganic dispersants other than talc and other additives may be appropriately added to the aqueous medium. As other inorganic dispersants, for example, inorganic fine particles such as aluminum oxide, tribasic calcium phosphate, magnesium pyrophosphate, zinc oxide, or the like can be used. These inorganic fine particles may be used solely or two or more types thereof may be used in combination. Examples of additives other than the inorganic dispersant include a dispersion aid and a surfactant. Examples of the dispersion aid include aluminum sulfate. Examples of the surfactant include anionic surfactants such as sodium alkylbenzenesulfonate, sodium dodecylbenzenesulfonate, and sodium alkanesulfonate. The surfactant may be used solely, or two or more types thereof may be used in combination.

(Blowing Agent Impregnation Step)

The blowing agent impregnation step is a step of impregnating the resin beads with a blowing agent. The blowing agent impregnation step may be performed after the dispersion step described above, or a part or all of the step may be performed while overlapping with the dispersion step.
In the blowing agent impregnation step, for example, a container containing the resin beads is hermetically sealed, and a blowing agent is added into the sealed container to impregnate the resin beads with the blowing agent. As a result, expandable resin beads containing the blowing agent in the resin beads can be obtained. As the blowing agent, for example, a physical blowing agent is used. The addition of the physical blowing agent into the sealed container may be performed at any timing before the resin beads are foamed. The blowing agent may be added to the aqueous medium together with the resin beads in the dispersion step, and then the resin beads may be impregnated with the blowing agent by heating or the like. In parallel with the dispersion step or after the completion of the dispersion step, a blowing agent may be introduced into the sealed container to impregnate the multilayer resin beads with the blowing agent. For example, when carbon dioxide is used as the physical blowing agent, the blowing agent in a solid state (specifically, in the form of dry ice) may be added to the aqueous medium together with the multilayer resin beads in the dispersion step, or carbon dioxide in a gaseous state may be introduced by injecting it under pressure into the sealed container in the dispersion step or after the completion of the dispersion step.
When the resin beads are impregnated with the blowing agent, the impregnation of the blowing agent into the resin beads can be promoted by heating and/or pressurizing the inside of the sealed container.

(Holding Step)

In addition, in order to adjust the crystalline state of the expanded beads, in the dispersion step and/or the blowing agent impregnation step described above, the rate of temperature rise of the sealed container may be adjusted, or the holding temperature and/or the holding time when the sealed container is maintained at a predetermined temperature may be adjusted. For example, the crystalline state of the expanded beads can be adjusted such that an endothermic peak (i.e., a high-temperature peak) appears, in a DSC curve obtained by heat flux differential scanning calorimetry, on a higher temperature side than an endothermic peak (i.e., a resin-intrinsic peak) of the main component of the base resin constituting the core layer of the expanded bead. From the viewpoint of widening the range of molding conditions (specifically, molding temperature and molding pressure) for obtaining a good molded body, expanded beads showing a high-temperature peak are preferable. The adjustment for obtaining the high-temperature peak described above is performed with reference to, for example, the method described in Japanese Patent No. 4077745.

(Blowing Agent)

The blowing agent may be appropriately selected from commonly-used blowing agents used for obtaining expanded beads. The blowing agent is preferably a physical blowing agent. As the physical blowing agent, an inorganic physical blowing agent and/or an organic physical blowing agent can be used. Examples of the inorganic physical blowing agent include carbon dioxide, air, nitrogen, helium, argon, and water. Examples of the organic physical blowing agent include aliphatic hydrocarbons such as propane, butane, and hexane; alicyclic hydrocarbons such as cyclopentane and cyclohexane; and halogenated hydrocarbons such as 2,3,3,3-tetrafluoropropene, trans-1,3,3,3-tetrafluoropropene, and trans-1-chloro-3,3,3-trifluoropropene.

These physical blowing agents may be used solely or two or more types thereof may be used in combination. Among these blowing agents, a blowing agent containing an inorganic physical blowing agent, such as carbon dioxide, nitrogen, or air, as a main component is preferably used, and carbon dioxide is more preferably used. In the present specification, containing an inorganic physical blowing agent as a main component means that the physical blowing agent contains 50 mol% or more of the inorganic physical blowing agent. The physical blowing agent preferably contains an inorganic physical blowing agent in an amount of 70 mol% or more, more preferably 90 mol% or more, and still more preferably consists only of an inorganic physical blowing agent.

The addition amount of the physical blowing agent is appropriately determined according to the type of the base resin constituting the resin beads, the type of the blowing agent, the bulk density of the target expanded beads, and the like. In particular, the addition amount of the physical blowing agent may be determined according to a desired bulk density. For example, when carbon dioxide is used as the physical blowing agent, the addition amount of carbon dioxide is preferably 0.1 parts by mass or more and 30 parts by mass or less, more preferably 0.5 parts by mass or more and 15 parts by mass or less, and still more preferably 1 part by mass or more and 10 parts by mass or less, relative to 100 parts by mass of the multilayer resin beads. The numerical range indicating the addition amount of carbon dioxide as the physical blowing agent (value relative to 100 parts by mass of the multilayer resin beads) may be, for example, a range (numerical range of the lower limit value or more and the upper limit value or less) in which any one value selected from the group consisting of 0.1 parts by mass, 0.5 parts by mass, and 1 part by mass is set as the lower limit value, and any one value selected from the group consisting of 30 parts by mass, 15 parts by mass, and 10 parts by mass is set as the upper limit value.

(Foaming Step)

The foaming step is a step of discharging the resin beads containing the blowing agent (that is, expandable resin beads) together with the aqueous medium from the container and foaming the resin beads to obtain expanded beads. More specifically, the expandable resin beads are foamed by discharging the expandable resin beads together with the aqueous medium under a pressure lower than the internal pressure of the container (specifically, the sealed container). According to such a foaming method, expanded beads having a low bulk density can be easily obtained.

The bulk density of the expanded beads can be adjusted, for example, by appropriately changing the foaming conditions such as the temperature and pressure in the sealed container when the content of the sealed container is discharged in the foaming step.

In addition, in the case of producing expanded beads having a lower bulk density, a step of foaming the expanded beads in multiple stages can be carried out as in the following two-stage foaming step. In the two-stage foaming step, first, the expanded beads obtained as described above are stored in a sealed container capable of pressurizing, and a gas such as air is injected into the sealed container to perform a pressurization treatment, thereby increasing the pressure (that is, internal pressure) in the cells of the expanded beads. Thereafter, the expanded beads having the increased internal pressure are taken out from the sealed container and heated with steam or hot air to foam the expanded beads, thereby performing the two-stage foaming step. By performing the two-stage foaming step, expanded beads having a lower bulk density (two-stage expanded beads) can be obtained. In addition, compared to a method of obtaining expanded beads having a low bulk density in a single foaming step, a method of obtaining expanded beads having a low bulk density by performing a two-stage foaming step can easily increase the cell diameter of the finally obtained expanded beads. The expanded bead molded body produced using the expanded beads obtained by performing the two-stage foaming step can further suppress the occurrence of unevenness in color tone. Therefore, in the case of producing expanded beads containing a colorant, it is preferable to perform the two-stage foaming step.

The expanded beads are used, for example, in the production of molded bodies. The molded body is produced, for example, by in-mold molding of the expanded beads.

Specifically, first, expanded beads are filled into a mold having a cavity corresponding to the shape of a molded body to be produced. Next, the expanded beads filled in the mold are heated with a heating medium such as steam. The expanded beads in the cavity are further foamed by heating and also are fusion-bonded to each other. As a result, the expanded beads are integrated with each other, so that a molded body corresponding to the shape of the cavity is obtained.

The molded body produced using the expanded beads is excellent in fusion bondability. Therefore, mechanical properties that are originally required for the expanded bead molded body are exhibited, and the expanded bead molded body is suitably used for various applications such as packaging materials, automobile members, and building materials, which require electrostatic chargeability.

The expanded beads of the present invention may be produced not only by the above-described method but also by other methods as long as talc can adhere to the surface thereof and/or can be contained in the expanded bead near the surface. For example, when talc is contained in the surface portion of the expanded beads, the expanded beads can also be produced by an extrusion foaming method using an extruder different from that used in the method for producing the expanded beads described above.

The expanded beads of the present invention and the molded body thereof can be used in various applications utilizing the charging phenomenon of the expanded beads or the expanded bead molded body, such as an air filter formed of an expanded bead molded body having communicating voids obtained by in-mold molding of hollow-portion containing cylindrical expanded beads of the present invention, an expanded bead molded body that has been subjected to electrostatic flocking treatment utilizing the electrostatic charging capabilities of the expanded bead molded body of the present invention, and the like.

[Examples]

Next, the present invention will be described in more detail with reference to Examples. However, the present invention is not limited to the examples.

The polypropylene-based resins used in Examples and Comparative Examples are as follows. In Tables 1 to 3, the polypropylene-based resins used in each Example and each Comparative Example are represented by abbreviations, PP1 to PP4.

(Polypropylene-based Resin)

· Abbreviation PP1; Ethylene-propylene random copolymer (melting point: 139°C, melt flow rate (230°C, load: 2.16 kg): 7.0 g/10min, flexural modulus: 850 MPa, amount of ethylene component: 3.1% by mass)
· Abbreviation PP2; Ethylene-propylene random copolymer (melting point: 127°C, melt flow rate (230°C, load: 2.16 kg): 24 g/10min, flexural modulus: 700 MPa, amount of ethylene component: 4.4% by mass)
· Abbreviation PP3; Ethylene-propylene random copolymer (melting point: 153°C, melt flow rate (230°C, load: 2.16 kg): 8.0 g/10min, flexural modulus: 1300 MPa, amount of ethylene component: 1.4% by mass)
· Abbreviation PP4; Propylene-ethylene-butene random copolymer (melting point: 135°C, ethylene component-containing melt flow rate (230°C, load: 2.16 kg): 5.0 g/10min, flexural modulus: 750 MPa, amount of ethylene component: 3.8% by mass, amount of butene component: 3.8% by mass)

The melt mass-flow rate of the polypropylene-based resin represented by each of the abbreviations PP1 to PP4 described above is determined as a value measured in accordance with JIS K7210-1:2014 under conditions of 230°C and a load of 2.16 kg. The flexural modulus of the polypropylene-based resin is determined as a value measured in accordance with JIS K7171:2008.

The amount of the ethylene component or the amount of the butene component in each of the polypropylene-based resins (specifically, an ethylene-propylene copolymer or an ethylene-propylene-butene copolymer) represented by the abbreviations PP1 to PP4 described above is a value obtained by a known method in which the amount is determined using an IR spectrum. Specifically, the amount of the ethylene component or the amount of the butene component is determined by a method described in Polymer Analysis Handbook (edited by The Japan Society for Analytical Chemistry, Research Committee of Polymer Analysis, published in January, 1995, published by Kinokuniya Shoten, page numbers and item names: 615 to 616 "II.2.3 2.3.4 Propylene/Ethylene Copolymer", 618 to 619 "II.2.3 2.3.5 Propylene/Butene Copolymer "), that is, a method of performing quantification from the relationship between a value obtained by correcting the absorbance of ethylene and butene with a predetermined coefficient, the thickness of a film-shaped test piece, and the like.

(Inorganic Compound)

· Talc; Average particle diameter 2.6 μm
· Kaolin; Average particle diameter: 3 μm

<EXAMPLE 1>

(Production of Multilayer Resin Beads)

A production apparatus including a core layer-forming twin-screw extruder having an inner diameter of 26 mm, a die for forming a multilayer strand provided downstream of the core layer-forming extruder, and a cover layer-forming single-screw extruder having an inner diameter of 25 mm was used. The production apparatus has both a configuration in which a downstream portion of the cover layer-forming extruder and the die for forming a multilayer strand are connected to each other and a configuration in which the melts for forming the respective layers can be laminated in the die and co-extrusion can be performed. As the base resin constituting the core layer, a propylene-ethylene random copolymer shown in Table 1 was used.

A core layer-forming material for forming the core layer (specifically, a base resin (the type is shown in Table 1), a cell controlling agent, and carbon black) was supplied to the core layer-forming extruder and melt-kneaded. In this manner, a melt of a core layer-forming resin composition containing 0.1% by mass of the cell controlling agent (specifically, zinc borate) and 2.6% by mass of carbon black (specifically, furnace black) was prepared.

A cover layer-forming material for forming a cover layer (specifically, a base resin (the type is shown in Table 1), carbon black (specifically, 2.6% by mass of furnace black), and talc (the blending amount is shown in Table 1)) was supplied to the cover layer-forming extruder and melt-kneaded. In this manner, a melt of the cover layer-forming resin composition in which the concentrations of the additives were equal to the blending amounts described in Table 1 was prepared. As the base resin constituting the cover layer, those shown in Table 1 were used.

After adjusting the discharge amounts of the respective extruders so that the ratio of the core layer to the cover layer was 95:5, the melts for forming the respective layers were introduced into a die for forming a multilayer strand, and merged in the die. A composite (specifically, a multilayer strand) having a hollow two-layer structure (a sheath-core structure of the cover layer and the core layer) was extruded through a fine hole of an extruder cap attached on the downstream side of the die. The extruded strand was cooled with water and cut with a pelletizer to obtain multilayer resin beads having an average mass per bead of 1.0 mg. The multilayer resin beads obtained in Example 1 are multilayer hollow resin beads.

(Production of Expanded Beads)

The multilayer hollow resin beads of 1 kg were supplied into a sealed container having an internal capacity of 5 L together with 3 L of water as an aqueous medium. In addition, an inorganic dispersant of the type and amount described in Table 1 and 0.004 parts by mass of a surfactant (trade name: Neogen S-20F, manufactured by DKS Co., Ltd., sodium dodecylbenzenesulfonate) (in an amount as an active ingredient), with respect to 100 parts by mass of the multilayer resin beads, were added to the sealed container. When talc is used as the inorganic dispersant, the talc used as the inorganic dispersant adheres to the surface of the expanded beads.

Next, carbon dioxide as a blowing agent was injected into the sealed container at room temperature and pressurized until the pressure reached 1.0 MPa (G) in terms of gauge pressure. As used herein, the pressure denoted by (G) means a gauge pressure, that is, a pressure value relative to the atmospheric pressure. Thereafter, the content in the sealed container was heated to a foaming temperature (specifically, 147°C) at a rate of temperature rise of 2°C/min while being stirred, and the container was pressurized with carbon dioxide until the pressure reached a gauge pressure of 2.0 MPa (G), and maintained at the same temperature for 15 minutes. Thus, the crystalline state of the expanded beads was adjusted so that the expanded beads had a high-temperature peak in an endothermic curve by DSC measurement.

Thereafter, the content in the sealed container (specifically, the resin beads and water) was released under atmospheric pressure to obtain expanded beads (specifically, first-stage expanded beads).

The first-stage expanded beads thus obtained as described above were left to stand in an environment of a temperature of 60°C, a relative humidity of 50%, and 1 atm for 24 hours to be cured. Then, the first-stage expanded beads after curing were filled in a sealed container capable of pressurization, and the pressure in the sealed container was increased from normal pressure to pressurize the expanded beads. The pressure in the cells of the expanded beads was increased while maintaining the expanded beads in a pressurized state, and the first-stage expanded beads were taken out from the sealed container to obtain first-stage expanded beads in which the internal pressure of the cells of the expanded beads was 0.5 MPa (G). Thereafter, the first-stage expanded beads were supplied to a second-stage foaming apparatus. Steam was supplied into the apparatus to foam the first-stage expanded beads, and the obtained second-stage expanded beads were dried at 40°C for 12 hours to obtain second-stage expanded beads. The expanded beads obtained by the two-stage foaming were used for the following measurements, production of an expanded bead molded body, and the like. Various physical properties of the obtained expanded beads are shown in Table 1.

(Production of Molded Body)

The expanded beads (specifically, second-stage expanded beads) were filled into a sealed container capable of pressurization, and the pressure in the sealed container was increased from normal pressure to pressurize the expanded beads. The expanded beads were maintained in a pressurized state for 24 hours to increase the pressure in the cells of the expanded beads. Thereafter, the expanded beads were taken out from the sealed container to obtain expanded beads in which an internal pressure of cells was 0.1 MPa (G). The expanded beads were filled in a mold (specifically, a metal mold) having a molding cavity capable of molding a plate-shaped molded body having a length of 200 mm, a width of 250 mm, and a height of 50 mm, and molded by the following heating method. In a state where drain valves provided on both surfaces of the mold were opened, steam was supplied to the mold to perform preheating (exhaust step). Thereafter, steam was supplied from one side of the mold to perform heating, and steam was further supplied from the other side of the mold to perform heating. Subsequently, heating was performed by supplying steam from both sides of the mold at the molding pressure (steam pressure for mold-heating) shown in Table 1. After completion of the heating, the pressure was released, and the molded body was cooled with water until the surface pressure due to the foaming force of the molded body reached 0.04 MPa (G). Then, the mold was opened, and the molded body was taken out. The molded body was cured in an oven at 80°C for 12 hours, and then slowly cooled to room temperature to obtain a box-shaped molded body having an upper opening. Various physical properties of the obtained molded body are shown in Table 1.

In Examples 2 and 3, expanded beads and molded bodies thereof were prepared in the same manner as that in Example 1 except that the amount of talc added to the cover layer was changed. Various conditions of each of Examples 2 and 3 and various physical properties of the expanded beads and the molded bodies obtained in Examples 2 and 3 are shown in Table 1.

In Examples 4 and 5, expanded beads and molded bodies thereof were prepared in the same manner as that in Example 1 except that the base resin of the core layer or the cover layer was changed as shown in Table 1. Various conditions of each of Examples 4 and 5 and various physical properties of the expanded beads and the molded bodies obtained in Examples 4 and 5 are shown in Table 1.

In Example 6, expanded beads and a molded body thereof were produced in the same manner as that in Example 1 except that the shape of the expanded beads was changed to a cylindrical shape. Various conditions of Example 6 and various physical properties of the expanded beads and the molded body obtained in Example 6 are shown in Table 1.

In each of Examples 7 and 8 through 12 described below, talc was not incorporated in the cover layer, and talc was caused to adhere to the surface of the multilayer expanded bead.

<Example 7>

(Production of Multilayer Resin beads)

A production apparatus including a core layer-forming twin-screw extruder having an inner diameter of 26 mm, a die for forming a multilayer strand provided downstream of the core layer-forming extruder, and a cover layer-forming single-screw extruder having an inner diameter of 25 mm was prepared. The production apparatus has a configuration in which a downstream portion of the cover layer-forming extruder and the die for forming a multilayer strand are connected to each other, and a configuration in which the melts for forming the respective layers can be laminated in the die and co-extrusion can be performed. As the base resin constituting the core layer, a propylene-ethylene random copolymer shown in Table 2 was used.

A core layer-forming material for forming a the core layer (specifically, a base resin: shown in Table 2, a cell controlling agent, and carbon black of 2.6% by mass) was supplied to the core layer-forming extruder and melt-kneaded. In this manner, a melt of a core layer-forming resin composition containing 0.1% by mass of the cell controlling agent (specifically, zinc borate) and 2.6% by mass of carbon black (specifically, furnace black) was prepared. A melt of a cover layer-forming resin composition was prepared in the same manner as in Example 1 except that the addition of talc was omitted. Resin beads were obtained from each of the melts using the same conditions and method as those in Example 1.

(Production of Expanded Beads)

The resin beads of 1 kg were supplied into a sealed container having an internal capacity of 5 L together with 3 L of water as an aqueous medium. In addition, talc (inorganic dispersant) of the amount described in Table 1 and 0.004 parts by mass of a surfactant (trade name: Neogen S-20F, manufactured by DKS Co., Ltd., sodium dodecylbenzenesulfonate) were added to the sealed container with respect to 100 parts by mass of the resin beads, and a dispersion system in which the content was dispersed in a dispersion medium was prepared.

Next, carbon dioxide as a blowing agent was injected into the sealed container at room temperature and pressurized until the pressure reached 1.0 MPa (G) in terms of gauge pressure. As used herein, the pressure denoted by (G) means a gauge pressure, that is, a pressure value based on the atmospheric pressure. Thereafter, the content in the sealed container was heated to a foaming temperature (specifically, 147°C) at a rate of temperature rise of 2°C/min while being stirred. Thereafter, carbon dioxide was injected into the sealed container to increase the pressure in the sealed container to 2.0 MPa (G) in terms of gauge pressure, and the pressure and the foaming temperature were maintained for 15 minutes. By maintaining the pressure and temperature in the sealed container, the crystalline state of the expanded beads was adjusted so that the expanded beads had a high-temperature peak in an endothermic curve by DSC measurement.

Thereafter, the content in the sealed container (specifically, the resin beads and water) was released under atmospheric pressure to obtain expanded beads (specifically, first-stage expanded beads).

The steps after the formation of the first-stage expanded beads were performed in the same manner as those in Example 1 to obtain expanded beads and an expanded bead molded body. Various conditions of Example 7 and various physical properties of the expanded beads and the molded body obtained in Example 7 are shown in Table 2.

Examples 8 to 12

Also in Examples 8 and 9, expanded beads and expanded bead molded bodies were obtained by performing the same steps as in Example 7 except that various conditions were changed as described in Table 2. In Examples 10 and 11, expanded beads and expanded bead molded bodies were obtained by performing the same steps as in Example 7 except that the base resin of the core layer or the cover layer was changed as shown in Table 2. In Example 12, expanded beads and an expanded bead molded body were obtained by performing the same steps as in Example 7 except that the shape of the expanded beads was changed to a cylindrical shape. Various conditions of each of Examples 8 to 12 and physical properties of the expanded beads and the molded body obtained in each Example are shown in Table 2.

For the expanded beads obtained in each of Examples and Comparative Examples, the bulk density, the total heat of fusion, the high-temperature peak heat, and the average cell diameter were measured as follows.

(Measurement of Bulk Density of Expanded Beads)

First, a plurality of expanded beads (expanded bead group) to be measured were allowed to stand for 24 hours or longer in an environment of an air temperature of 23°C, a relative humidity of 50%, and 1 atm. Thereafter, a measuring cylinder was filled with a mass W (unit: g) of the expanded bead group, and the bottom surface of the measuring cylinder was lightly tapped several times to stabilize the filling height of the expanded bead group in the measuring cylinder. A bulk volume V (unit: L) of the expanded bead group indicated by the scale of the measuring cylinder was read, and a value obtained by dividing the mass W of the expanded bead group by the bulk volume V of the expanded bead group (i.e., W/V) was calculated. The obtained value was subjected to unit conversion to obtain the bulk density (unit: $kg/m^3$) of the expanded beads.

(Measurement of Total Heat of Fusion and High-Temperature Peak Heat of Fusion)

An expanded bead with about 2 mg was collected from the expanded bead group after curing or drying. The expanded bead was used as a test piece, and a DSC curve was obtained by heating the test piece from 23°C to 200°C at a heating rate of 10°C/min using a differential scanning calorimeter (specifically, DSC7020 manufactured by Hitachi High-Tech Corporation). An area of all the melting peaks in the DSC curve was determined, and was defined as the total heat of fusion. In addition, an area of the high-temperature peak in the DSC curve was determined, and was defined as the high-temperature peak heat of fusion. The measurement was performed for five expanded beads, and the arithmetic average values were adopted as the measurement results of the total heat of fusion and the high-temperature peak heat of fusion.

(Average Cell Diameter)

The expanded bead was substantially divided into two so as to pass through the center portion of the expanded bead, and a photograph of the cut surface (cross-sectional photograph) was taken using a scanning electron microscope. In the obtained cross-sectional photograph, four line segments were drawn at equal angular intervals from the outermost surface of the expanded bead through the center to the outermost surface on the opposite side. The number of cells intersecting each line segment was counted, and a value obtained by dividing the total length of the four line segments by the total number of cells intersecting the line segments was defined as the average cell diameter of one expanded bead. This operation was performed on 10 expanded beads randomly extracted, and the arithmetic average of the values obtained for the respective expanded beads was defined as the average cell diameter of the expanded beads in the present specification.

The apparent density, evaluation of the fusion bondability, and the withstand voltage attenuation rate of the molded body obtained in each of Examples and Comparative Examples were measured as follows. The tensile strength of the molded body and the tensile strength/molded body density were measured using the methods described above.

(Measurement of Density of Molded Body)

The density (apparent density (unit: $kg/m^3$) was calculated by dividing the mass of a molded body by the volume calculated based on the dimensions of the molded body.

(Evaluation of Fusion Bondability)

When a molded body was fractured, the number (A) of the expanded beads which were present on the fracture surface and of which the material was broken was divided by the number (B) of all the expanded beads present on the fracture surface (represented by the following formula (2)), and the obtained value was expressed in percentage to obtain the fusion-bonding ratio. A case of 80% or more was regarded as acceptable and indicated by "o" (Circle) in Table 1, and a case of less than 80% was regarded as unacceptable and indicated by "×" (Cross) in Table 1.

$$\text{Fusion-bonding ratio} = A/B \times 100\% \dots (2)$$

(Measurement of Charged Voltage Attenuation)

A test piece having dimensions defined by length 45 mm × width 45 mm × thickness 5 mm was cut out from the surface of the produced molded body. In the cut-out test piece, one of two surfaces defined by length 45 mm × width 45 mm is in a state where a skin derived from the surface of the molded body remains. Using the cut-out test piece, the charged voltage attenuation rate was determined in accordance with JIS L1094:2014 A method, in which the applied voltage was set to +10 kV, based on the following formula (3) using an initial charged voltage (0 seconds) $V_0$ (kV) and a charged voltage $V_{120}$ (kV) at 120 seconds after stoppage of voltage application (note that a treatment for removing an inorganic dispersant adhering to the sample as a test piece was not performed).

$$\text{Charged voltage attenuation rate} = (V_0 - V_{120}) \times 100/V_0 \dots$$

(3)

For the expanded beads and the molded body obtained in each of Examples and Comparative Examples, the surface talc amount (amount of talc present) was determined using the method described in "Measurement of Amount of Talc Present in Multilayer Expanded Beads and Measurement of Amount of Talc Present in Expanded Bead Molded Body" below.

(Measurement of Amount of Talc Present in Multilayer Expanded Beads and Measurement of Amount of Talc Present in Expanded Bead Molded Body)

(1) Examples 1 to 6 and Comparative Example 2

(Procedure 1) Preparation of Calibration Curve

A calibration curve defining the relationship between the amount of talc present and the absorption intensity, which will be described below, was determined as follows. First, in order to prepare a calibration curve, a solid sheet in which a predetermined amount of talc was kneaded into a polypropylene-based resin (a sheet of a polypropylene-based resin in which the blending amount of talc was known) (the thickness of the solid sheet was 50 μm) was prepared. As a kneader for producing the solid sheet, MC-15HT manufactured by Xplore Instruments BV was used. Talc and a polypropylene-based resin were kneaded using the kneader under conditions of 200°C and 50 rpm, for 3 minutes to obtain polypropylene pellets. Then, the polypropylene pellets were formed into a solid sheet at 200°C using a heat press, and further cooled to room temperature to prepare a sheet having a thickness of about 50 μm. The sheet surface of the "solid sheet obtained by kneading talc into the polypropylene-based resin" was brought into close contact with a prism, and measurement was performed by an ATR method using an infrared spectrophotometer to obtain an infrared absorption spectrum of the solid sheet. Based on the infrared absorption spectrum of the solid sheet, a peak recognized in the vicinity of a wavelength of 1000 cm$^{-1}$ (referred to as a first absorption peak) and a peak recognized in the vicinity of a wavelength of 650 cm$^{-1}$ (referred to as a second absorption peak) were determined as peaks derived from talc. Furthermore, based on the infrared absorption spectrum of the solid sheet, two types of calibration curves defining the relationship between the absorption intensity (absorbance value) at these absorption peaks and the amount of talc added to the solid sheet (amount of talc present) were prepared. Regarding the two types of calibration curves, one defines the relationship between the absorption intensity at the first absorption peak and the amount of talc present (a first calibration curve based on an absorption peak in the vicinity of the wavelength of 1000 cm$^{-1}$), and one defines the relationship between the absorption intensity at the second absorption peak and the amount of talc present (a second calibration curve based on a peak in the vicinity of the wavelength of 650 cm$^{-1}$).

(Procedure 2) Measurement of Sample

The expanded bead prepared in each of Examples 1 to 6 and Comparative Example 2 was held with tweezers, and the surface thereof was rubbed 10 times with Kimtowel to remove inorganic dispersants adhering to its surface, thereby preparing an expanded bead from which the adhering kaolin was removed. The surface of the expanded bead was used as a measurement sample. Then, under the following measurement conditions, the surface of the expanded bead of the measurement sample was brought into close contact with a prism at a pressing pressure of 340 kg/cm$^2$, infrared light was allowed to enter, and light that had been totally reflected was measured to obtain an infrared absorption spectrum (without ATR correction).

Separately, the expanded bead prepared in each of Examples 1 to 6 and Comparative Example 2 was cut into approximately two equal parts so as to have approximately the same volume through the center thereof, thereby obtaining measurement samples. The cut surface of the measurement sample was brought into close contact with a prism, infrared light was allowed to enter in the same manner as described above, and the light totally reflected was measured to obtain an infrared absorption spectrum (without ATR correction). As a difference spectrum between the two spectra, an infrared absorption spectrum corresponding to talc present in the cover layer of the expanded bead was obtained.

(Procedure 3) Calculation of Amount of Talc Present in Surface Portion of Expanded bead

Using the first calibration curve prepared by employing the peak in the vicinity of the wavelength of 1000 cm$^{-1}$ and the second calibration curve prepared by employing the peak in the vicinity of the wavelength of 650 cm$^{-1}$ as the calibration curves prepared in Procedure 1, the amount of talc present in the surface portion of the expanded bead was calculated from the difference spectrum measured in Procedure 2, that is, the absorption intensity of the peak corresponding to talc present in the cover layer of the expanded bead.

Of the two calibration curves, the first calibration curve prepared by employing the peak in the vicinity of the wavelength of 1000 cm$^{-1}$ was preferentially used to calculate the amount of talc present in the surface portion of the expanded bead. When an accurate difference spectrum in the vicinity of the wavelength of 1000 cm$^{-1}$ could not be determined, the amount of talc present in the surface portion of the expanded bead was calculated using the second calibration curve prepared by employing the peak in the vicinity of 650 cm$^{-1}$. Examples of the case where an accurate difference spectrum in the vicinity of the wavelength of 1000 cm$^{-1}$ cannot be determined include a case where, when the infrared absorption spectrum (difference spectrum) of the surface portion of the expanded bead measured in (Procedure 2) is determined, the absorption intensity of the peak in the vicinity of the wavelength of 1000 cm$^{-1}$ is equal to or higher than the upper limit of detection for measurements with the infrared spectrophotometer.

Since it is unlikely that talc other than the talc present in the expanded bead is mixed in during the production process (talc incorporation during the production process), talc is present only in the cover layer of the expanded bead. Thus, the amount of talc present in the surface portion of the expanded bead is the amount of talc calculated based on the infrared absorption spectrum measured by the method described above and the calibration curve (the "amount of talc present on surface" described above).

(2) Examples 7 to 12 and Comparative Examples 1, 3 and 4

A calibration curve defining the relationship between the amount of talc present and the absorption intensity described below was determined by applying the same method as that in "Procedure 1 " of (1) Examples 1 to 6 and Comparative Example 2 described above.

A difference spectrum was measured using the expanded bead produced in each of Examples 7 to 12 and Comparative Examples 1, 3, and 4. In the expanded bead produced in each of Examples 7 to 12 and Comparative Examples 1, 3 and 4, talc adheres to the surface portion of the expanded bead. Therefore, the surface portion of the expanded bead was directly used as a measurement sample. Specifically, the surface portion of the expanded bead was directly used as a measurement sample without "an operation in which the expanded bead was held with tweezers, and the surface thereof was rubbed 10 times with Kimtowel to remove inorganic dispersants adhering to its surface". The difference spectrum was measured based on the measurement sample using the surface portion of the expanded bead. The difference spectrum was obtained by applying the same method as that in "Procedure 2" of (1) Examples 1 to 6 and Comparative Example 2 described above.

For each of Examples 7 to 12 and Comparative Examples 1, 3, and 4, the amount of talc present in the surface portion of the expanded bead was calculated by the same method as that in "Procedure 3" in (1) Examples 1 to 6 and Comparative Example 2 described above. That is, the amount of talc present in the surface portion of the expanded bead was calculated based on the calibration curves and the difference spectrum.

Since the incorporation of talc in the production process is presumed to no occur, talc adheres only to the surface of the expanded bead, and the amount of talc present in the surface portion of the expanded bead is the amount of talc present calculated based on the calibration curve and the difference spectrum.

<Measurement Conditions>

Prism: Zinc selenide
Incident angle of infrared light: 45°
Number of integration: 512 times
Resolution: 4 cm$^{-1}$
Detector: TGS (Triglycine sulfate)
Measurement wave number region: 600 to 4000 cm$^{-1}$
Number of reflections: 1
Measurement region: a region from the surface to 20 $\mu$m
Apparatus: FT/IR-4600 type A (ATR PRO450-S type) manufactured by JASCO Corporation

(3) Amount of Talc Present in Expanded Bead Molded Body

Also in the expanded bead molded body produced in each of Examples 1 to 12 and Comparative Examples 1 to 4, the amount of talc present was measured by applying the same methods as the methods described in "Procedure 1" to "Procedure 3" of (1) Examples 1 to 6 and Comparative Example 2 described above except that the measurement target was changed from the expanded bead to the expanded bead molded body. The measurement results are as shown in the surface talc amount (amount of talc present) column in the molded body evaluation column of Tables 1, 2, and 3.

In Tables 1, 2 and 3, the values of CB (wt%)/surface talc (wt%) are shown. The surface talc (wt%) is determined based on the measurement value of the amount of talc present described above. CB (wt%) is the amount of carbon materials contained in the expanded beads, and is the amount of carbon black contained in Examples 1 to 12 and Comparative Examples 1 to 4.

Comparative Example 1

Expanded beads and a molded body were produced in the same manner as that in Example 1 except that talc was not added to the cover layer. Various conditions and various physical properties of the obtained expanded beads and molded body are shown in Table 3. In Comparative Example 1, the charged voltage attenuation rate became higher than those in Example 1 and the like.

Comparative Example 2

Expanded beads and a molded body were produced in the same manner as that in Example 1 except that the amount of talc added to the cover layer was less than the lower limit of the claimed range. Various conditions of the resin beads and the foaming step, and various physical properties of the obtained expanded beads and the molded body are shown in Table 3. In Comparative Example 2, the charged voltage attenuation rate became higher than those in Example 1 and the like.

Comparative Example 3

Expanded beads were produced in the same manner as that in Example 4 except that the amount of talc added as the inorganic dispersant during the production of expanded beads was reduced. The dispersibility in the container during the production of the expanded beads was low, and so the expanded beads could not be stably produced. Various conditions of the resin beads and the foaming step, and various physical properties of the obtained expanded beads are shown in Table 3. In Comparative Example 3, since the amount of the obtained expanded beads was small, a molded body could not be obtained, and the physical properties of the molded body could not be measured.

Comparative Example 4

Expanded beads were produced in the same manner as that in Example 4 except that the amount of talc added as the inorganic dispersant during the production of expanded beads was increased. Various conditions of the resin beads and the foaming step, and various physical properties of the expanded beads are shown in Table 3. In Comparative Example 4, the fusion bondability of the expanded beads was low, so that the expanded bead molded body could not be stably produced. The physical properties of the molded body could not be measured because the molded body could not be obtained.

Table 1]

| | | | | Unit | Example 1 | Example 2 | Example 3 | Example 4 | Example 5 | Example 6 |
|---|---|---|---|---|---|---|---|---|---|---|
| Resin Beads | Core Layer | Base Resin | Type | - | PP1 | PP1 | PP1 | PP3 | PP1 | PP1 |
| | Cover Layer | Base Resin | Type | - | PP2 | PP2 | PP2 | PP2 | PP4 | PP2 |
| | | Talc | Blending Ratio | ppm by mass | 2000 | 8000 | 700 | 2000 | 2000 | 2000 |
| | Shape of Expanded Beads | | | - | Tubular Shape | Tubular Shape | Tubular Shape | Tubular Shape | Tubular Shape | Cylindrical Shape |
| Foaming Step | Inorganic Dispersant | | | - | Kaolin | Kaolin | Kaolin | Kaolin | Kaolin | Kaolin |
| | Amount of Inorganic Dispersant | | | Part by mass | 0.6 | 0.6 | 0.6 | 0.6 | 0.6 | 0.6 |
| Expanded Beads | Bulk Density | | | kg/m$^3$ | 27 | 27 | 27 | 27 | 27 | 26 |
| | Total Heat of Fusion | | | J/g | 75 | 72 | 76 | 92 | 72 | 74 |
| | High-Temperature Peak Heat of Fusion | | | J/g | 15 | 14 | 14 | 22 | 15 | 15 |
| | Average Cell Diameter | | | μm | 124 | 108 | 118 | 90 | 115 | 115 |
| | Surface Talc Amount(Amount of Talc Present) | | | ppm by mass | 2000 | 8000 | 700 | 2000 | 2000 | 2000 |
| | CB (wt%)/Surface Talc (wt%) | | | - | 13 | 3.3 | 37 | 13 | 13 | 13 |
| Evaluation of Molded Body | Molding Pressure | | | MPa(G) | 0.26 | 0.26 | 0.26 | 0.32 | 0.30 | 0.26 |
| | Fusion Bondability | | | - | ○ | ○ | ○ | ○ | ○ | ○ |
| | Apparent Density | | | kg/m$^3$ | 30 | 30 | 30 | 29 | 30 | 29 |
| | Tensile Strength | | | kPa | 406 | 397 | 397 | 368 | 393 | 368 |
| | Tensile Strength/Molded Body Density | | | kPa/(kg/m$^3$) | 13.5 | 13.3 | 13.3 | 12.7 | 13.3 | 12.7 |
| | Surface Talc Amount(Amount of Talc Present) | | | ppm by mass | 2000 | 8000 | 700 | 2000 | 2000 | 2000 |
| | CB (wt%)/Surface Talc (wt%) | | | - | 13 | 3.3 | 37 | 13 | 16 | 13 |
| | Charged Voltage Attenuation Rate | | | % | 4.0 | 3.0 | 5.0 | 4.0 | 4.2 | 5.0 |

[Table 2]

| | | | | Unit | Example 7 | Example 8 | Example 9 | Example 10 | Example 11 | Example 12 |
|---|---|---|---|---|---|---|---|---|---|---|
| Resin Beads | Core Layer | Base Resin | Type | - | PP1 | PP1 | PP1 | PP3 | PP1 | PP1 |
| | Cover Layer | Base Resin | Type | - | PP2 | PP2 | PP2 | PP2 | PP4 | PP2 |
| | | Talc | Blending Ratio | ppm by mass | 0 | 0 | 0 | 0 | 0 | 0 |
| | Shape of Expanded Beads | | | - | Tubular Shape | Tubular Shape | Tubular Shape | Tubular Shape | Tubular Shape | Cylindrical Shape |
| Foaming Step | Inorganic Dispersant | | | - | Talc | Talc | Talc | Talc | Talc | Talc |
| | Amount of Inorganic Dispersant | | | Part by mass | 0.2 | 0.1 | 1.2 | 0.2 | 0.2 | 0.2 |
| Expanded Beads | Bulk Density | | | kg/m$^3$ | 26 | 27 | 26 | 27 | 27 | 28 |
| | Total Heat of Fusion | | | J/g | 74 | 74 | 73 | 92 | 72 | 74 |
| | High-Temperature Peak Heat of Fusion | | | J/g | 14 | 15 | 15 | 22 | 15 | 15 |
| | Average Cell Diameter | | | μm | 142 | 135 | 117 | 92 | 114 | 148 |
| | Surface Talc Amount(Amount of Talc Present) | | | ppm by mass | 1900 | 1000 | 6500 | 1900 | 2000 | 1900 |
| | CB (wt%)/Surface Talc (wt%) | | | - | 14 | 26 | 4.0 | 14.0 | 13.0 | 14 |
| Evaluation of Molded Body | Molding Pressure | | | MPa(G) | 0.28 | 0.26 | 0.50 | 0.30 | 0.30 | 0.28 |
| | Fusion Bondability | | | - | ○ | ○ | ○ | ○ | ○ | ○ |
| | Apparent Density | | | kg/m$^3$ | 29 | 30 | 29 | 30 | 30 | 31 |
| | Tensile Strength | | | kPa | 368 | 387 | 371 | 520 | 385 | 419 |
| | Tensile Strength/Molded Body Density | | | kPa/(kg/m$^3$) | 12.7 | 13.1 | 12.8 | 17.3 | 12.9 | 13.7 |
| | Surface Talc Amount(Amount of Talc Present) | | | ppm by mass | 1600 | 900 | 6000 | 1600 | 2000 | 1600 |
| | CB (wt%)/Surface Talc (wt%) | | | - | 16 | 28 | 4.3 | 16.0 | 13.0 | 16 |
| | Charged Voltage Attenuation Rate | | | % | 4.0 | 6.0 | 2.0 | 4.0 | 4.2 | 7.0 |

[Table 3]

| | | | | Unit | Comparative Example1 | Comparative Example2 | Comparative Example3 | Comparative Example4 |
|---|---|---|---|---|---|---|---|---|
| Resin Beads | Core Layer | Base Resin | Type | - | PP1 | PP1 | PP1 | PP1 |
| | Cover Layer | Base Resin | Type | - | PP2 | PP2 | PP2 | PP2 |
| | | Talc | Blending Ratio | ppm by mass | 0 | 200 | 0 | 0 |
| | Shape of Expanded Beads | | | - | Tubular Shape | Tubular Shape | Tubular Shape | Tubular Shape |
| Foaming Step | Inorganic Dispersant | | | - | Kaolin | Kaolin | Talc | Talc |
| | Amount of Inorganic Dispersant | | | Part by mass | 0.6 | 0.6 | 0.02 | 2.4 |
| Expanded Beads | Bulk Density | | | kg/m$^3$ | 26 | 27 | 27 | 26 |
| | Total Heat of Fusion | | | J/g | 73 | 75 | 75 | 74 |
| | High-Temperature Peak Heat of Fusion | | | J/g | 14 | 15 | 14 | 15 |
| | Average Cell Diameter | | | $\mu$m | 130 | 114 | 127 | 145 |
| | Surface Talc Amount(Amount of Talc Present) | | | ppm by mass | 0 | 200 | 150 | 13000 |
| | CB (wt%)/Surface Talc (wt%) | | | - | - | 130 | 173 | 2.0 |
| Evaluation of Molded Body | Molding Pressure | | | MPa(G) | 0.26 | 0.26 | - | - |
| | Fusion Bondability | | | - | ○ | ○ | - | - |
| | Apparent Density | | | kg/m$^3$ | 29 | 30 | - | - |
| | Tensile Strength | | | kPa | 361 | 406 | - | - |
| | Tensile Strength/Molded Body Density | | | kPa/(kg/m$^3$) | 12.6 | 13.5 | - | - |
| | Surface Talc Amount(Amount of Talc Present) | | | ppm by mass | 0 | 200 | - | - |
| | CB (wt%)/Surface Talc (wt%) | | | - | - | 130 | - | - |
| | Charged Voltage Attenuation Rate | | | % | 37 | 28 | - | - |

Reference Signs List

1A    Single-layer expanded bead

1B    Multilayer expanded bead
2      Core layer
3      Cover layer
4      Foamed layer
5      Talc

**Claims**

1.  A molded body of polypropylene-based resin expanded beads containing carbon materials, wherein talc is present in a surface portion of the molded body of the expanded beads, and an initial charged voltage $V_0$ at an applied voltage of +10 kV and a charged voltage $V_{120}$ at 120 seconds after stoppage of voltage application, which are measured in accordance with JIS L1094:2014 A method, meet the following formula (1):

$$(V_0 - V_{120}) \times 100/V_0 \leq 25 \ldots (1).$$

2.  The molded body of polypropylene-based resin expanded beads according to claim 1, wherein an amount of talc present in the surface portion of the molded body of the expanded beads is 500 ppm by mass or more and 9000 ppm by mass or less.

3.  The molded body of polypropylene-based resin expanded beads according to claim 1 or 2, wherein a molded body density of the molded body of the expanded beads is 15 kg/m$^3$ or more and 300 kg/m$^3$ or less, and a fusion-bonding ratio of the molded body of the expanded beads is 80% or more.

4.  Polypropylene-based resin expanded beads containing carbon materials, wherein talc is present in a surface portion of the expanded bead, and an amount of the talc present in the surface portion of the expanded bead is 600 ppm by mass or more and 10000 ppm by mass or less.

5.  The polypropylene-based resin expanded beads according to claim 4, wherein the expanded beads are multilayer expanded beads each having a polypropylene-based resin foamed core layer and a cover layer that covers the foamed core layer, and at least the cover layer contains carbon materials.

Figure 1

Fig. 1

1A

5

5

4

Figure 2

Fig. 2

1A

4

5

5

Figure 3

## Fig. 3

Figure 4

## Fig. 4

## INTERNATIONAL SEARCH REPORT

| International application No. |
| --- |
| **PCT/JP2024/018917** |

**A.     CLASSIFICATION OF SUBJECT MATTER**

*C08J 9/224*(2006.01)i; *C08J 9/16*(2006.01)i
FI:    C08J9/224 CES; C08J9/16

According to International Patent Classification (IPC) or to both national classification and IPC

**B.     FIELDS SEARCHED**

Minimum documentation searched (classification system followed by classification symbols)

C08J9/00-9/42; B29C44/00-44/60; B29C67/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
| --- | --- | --- |
| X | WO 2013/022049 A1 (KANEKA CORP.) 14 February 2013 (2013-02-14) claims, paragraphs [0006]-[0008], [0011], [0101]-[0105], examples 1-9 | 4 |
| A | | 1-3, 5 |
| X | WO 2018/193901 A1 (KANEKA CORP.) 25 October 2018 (2018-10-25) claims, paragraph [0048], examples 1-9 | 4 |
| A | | 1-3, 5 |
| X | JP 2018-162371 A (KANEKA CORP.) 18 October 2018 (2018-10-18) claims, paragraphs [0037]-[0038], [0104], examples 1-6, 8-10 | 4 |
| A | | 1-3, 5 |
| A | JP 11-147972 A (JSP CORP.) 02 June 1999 (1999-06-02) claims, paragraphs [0026]-[0027] | 1-5 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **07 August 2024** | **20 August 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

| International application No. |
| --- |
| **PCT/JP2024/018917** |

**C. DOCUMENTS CONSIDERED TO BE RELEVANT**

| Category* | Citation of document, with indication, where appropriate, of the relevant passages | Relevant to claim No. |
| --- | --- | --- |
| A | JP 60-67543 A (SUMITOMO CHEMICAL CO., LTD.) 17 April 1985 (1985-04-17) claims, p. 3, upper left column, line 19 to upper right column, line 14, p. 4, upper right column, lines 1-15, p. 5, upper left column, line 2 to upper right column, line 5 | 1-5 |

Form PCT/ISA/210 (second sheet) (July 2022)

## INTERNATIONAL SEARCH REPORT
### Information on patent family members

International application No.

**PCT/JP2024/018917**

| Patent document cited in search report | Publication date (day/month/year) | Patent family member(s) | Publication date (day/month/year) |
|---|---|---|---|
| WO 2013/022049 A1 | 14 February 2013 | US 2014/0171534 A1<br>claims, paragraphs [0006]-[0008], [0015], [0103]-[0108], examples 1-9<br>EP 2743295 A1<br>CN 103748148 A | |
| WO 2018/193901 A1 | 25 October 2018 | US 2020/0040156 A1<br>claims, paragraph [0067], examples 1-9<br>EP 3613801 A1<br>CN 110506071 A | |
| JP 2018-162371 A | 18 October 2018 | (Family: none) | |
| JP 11-147972 A | 02 June 1999 | (Family: none) | |
| JP 60-67543 A | 17 April 1985 | US 4521487 A<br>claims, column 3, lines 24-41, column 4, lines 42-58, column 5, lines 42-68<br>EP 138431 A2 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7300537 A
- JP HEI7137063 A
- JP 2006307177 A

- JP 7137063 A
- JP 4077745 B

**Non-patent literature cited in the description**

- Research Committee of Polymer Analysis. Polymer Analysis Handbook. Kinokuniya Shoten, January 1995, 615-616